# EUROPÄISCHE PATENTSCHRIFT

(11) **EP 3 714 685 B1**
(45) Veröffentlichungstag und Bekanntmachung des Hinweises auf die Patenterteilung: **21.01.2026**
(21) Anmeldenummer: 19164921.9
(22) Anmeldetag: 25.03.2019
(51) Int. Cl.: A01K 5/00

(54) **VORRICHTUNG ZUM BEARBEITEN VON ERNTEGUT, TIERFUTTER ODER -KOMPONENTEN, ELEKTRONISCHES NIR-SENSORSYSTEM SOWIE VERFAHREN ZUM KALIBRIEREN**
DEVICE FOR PROCESSING CROP, ANIMAL FEED OR COMPONENTS, ELECTRONIC NIR SENSOR SYSTEM AND METHOD FOR CALIBRATING
DISPOSITIF DE TRAITEMENT DU PRODUIT DE LA RÉCOLTE, DE L'ALIMENT POUR ANIMAUX OU DE LEURS COMPOSANTS, SYSTÈME DE DÉTECTION NIR ÉLECTRONIQUE ET PROCÉDÉ DE CALIBRAGE

(43) Veröffentlichungstag der Anmeldung: 30.09.2020
(73) Patentinhaber: Trioliet B.V., 7575 BE Oldenzaal (NL)
(72) Erfinder: Liet, Robert Jan, 7573 CS Oldenzaal (NL)
(74) Vertreter: Grünecker Patent- und Rechtsanwälte PartG mbB

(56) Entgegenhaltungen:
- EP-A1- 3 332 635
- EP-A2- 1 956 361
- WO-A1-99/58959

## Beschreibung

Die Erfindung betrifft eine Vorrichtung gemäß Oberbegriff des Anspruchs 1, ein elektronisches NIR-Sensorsystem gemäß Oberbegriff des Anspruchs 21, und ein Verfahre zum Kalibrieren gemäß Oberbegriff des Anspruchs 22.

In einer gattungsgemäßen, als Futtermischwagen ausgebildeten Vorrichtung gemäß EP 3 332 635 A1 ist das NIR-Sensorsystem an einer Messstelle an oder im Werkzeug verbaut. Der Abtastkopf blickt mit dem Sensor beim Mischprozess durch eine lichtdurchlässige Scheibe in das Futter oder die Futterkomponenten, um spektroskopisch anteilige Futterbestandteile und/oder den Mischungsgrad zu ermitteln, beispielsweise zum Steuem des Mischprozesses. Der Sensor nimmt reflektierte NIR-Lichtbestandteile auf, die ausgewertet werden. Solche zum Raufutter zugegebenen Bestandteile sind beispielsweise Zellstoff, Eiweiß, Trockenmasse, Zucker, Stärke, Asche und dergleichen. Da sich die Intensität oder Lichtqualität der NIR-Lichtquelle, z.B. mehrerer Lampen, mit der Zeit verändern kann, ist es zum Erzielen gleichbleibend aussagefähiger Messergebnisse notwendig, das Sensorsystem zu kalibrieren. Hierzu wird bisher z. B. eine Kalibrierfläche mit einem bekannten Reflexionswert- oder -Spektrum manuell eingesetzt. Bei dem bekannten Futtermischwagen ist es dann erforderlich, in den Mischbehälter zu steigen, was mühsam und zeitaufwendig ist.

In einer aus WO 99/58959 A1 bekannten Vorrichtung zum Bearbeiten von Erntegut, Tierfutter- oder - Komponenten wird zum Kalibrieren eines einen Monochromator aufweisenden NIR-Sensorsystems zunächst das hinter einer Scheibe einen NIR-Sensor und eine Lampe enthaltende Gehäuse des Monochromators als Gesamtheit aus der Arbeitsposition des Monochromators verlagert, ehe eine Referenzkachel außerhalb des Gehäuses im Strahlengang von der Lampe zum NIR-Sensor platziert wird. Nach dem Kalibrieren wird zunächst die Referenzkachel aus dem Bewegungsweg des verlagerten Monochromators bewegt, und dann der Monochromator zurückgestellt. Die Referenzkachel hat eine weiße Einfärbung. Für die Referenzkachel und den ganzen Monochromator werden zwei separate, getrennt steuerbare und außerhalb des Gehäuses vorgesehene Bewegungsantriebe benötigt.

Solche elektronischen Sensorsysteme können bei allen bekannten Formen von Werkzeugen in solchen Vorrichtungen eingesetzt werden, aber auch bei anderen Erntegut, Futter und/oder Futterkomponenten bearbeitenden Vorrichtungen, wie beispielsweise Beladeeinrichtungen, Ladewagen, Häckslern oder dergleichen Applikationen, bei denen das Sensorsystem häufig kalibriert werden muss.

Bei einem aus EP 1 740 928 B1 bekannten Verfahren zum Kalibrieren eines spektrometrischen Messkopfes zur Ermittlung von Tierfutter-Bestandteilen sind im Gehäuse des NIR-Sensorsystems zwei Kalibrierflächen mit unterschiedlichen Erscheinungsbildern beweglich angeordnet, die zum Kalibrieren jeweils in den Strahlengang der Lichtquelle verstellbar sind. Der Abtastkopf ist mit dem Sensor stationär verbaut.

Bei einem aus DE 10 2007 061 213 A1 bekannten Sensorsystem zum Abtasten einer Probe werden zum Kalibrieren vor die Abtast-Scheibe des Gehäuses bringbare Kalibrierflächen, z. B. mit weißer und schwarzer Einfärbung benutzt. Der spektrometrische Sensor ist stationär im Gehäuse verbaut.

Aus US 4,970,695 A ist ein Verfahren zum Abtasten einer Zementauskleidung eines mit Flüssigkeit gefüllten Bohrlochs mittels eines Ultraschallsensors an einer Sonde bekannt, die um die Bohrlochachse rotiert. In einem den Sensor lagernden Abtastkopf ist eine Kalibrierfläche platziert. Der Ultraschallsensor wird durch Umkehr der Drehrichtung der Sonde nur durch Trägheits- und Reibungskräfte passiv auf die Kalibrierfläche ausgerichtet, die in der umgebenden Flüssigkeit das gleiche Erscheinungsbild wie die Zementauskleidung hat.

Der Erfindung liegt die Aufgabe zugrunde, eine Vorrichtung der eingangs genannten Art, ein elektronisches Sensorsystem sowie ein Verfahren anzugeben, die nicht nur ohne Eingriff von außen eine zuverlässige Selbst-Kalibrierung, sondern in der Praxis unter Nutzen moderner Datenverarbeitungs-Technologien eine präzise Prozesssteuerung der Vorrichtung ermöglichen.

Die gestellte Aufgabe wird mit den Merkmalen des Anspruchs 1, des Anspruchs 21, oder des Anspruchs 22 gelöst.

In der Vorrichtung wird der NIR-Abtastkopf mit dem Sensor innerhalb des Gehäuses zur Kalibrierung aktiv und sehr präzise zwischen der Abtastposition und der jeweiligen Kalibrierposition verstellt, in welcher er unter gleichen optischen und geometrischen Bedingungen wie auf die Scheibe in der Abtastposition auf die Kalibrierfläche ausgerichtet ist. Baulich einfach ist der NIR-Abtastkopf im Gehäuse mittels eines, vorzugsweise elektrischen oder elektromechanischen, Antriebs schwenkbar oder umfänglich oder taumelnd oder exzentrisch drehbar oder linear verschiebbar, und gegebenenfalls dabei heb- und absenkbar. Diese Bewegungsarten sind einfach steuerbar und ermöglichen über lange Standzeiten die jeweils exakte reproduzierbare Positionierung des Abtastkopfes. Andere Bewegungsmuster als die erwähnten sind ebenfalls möglich. Damit lassen sich auch kompakte Abmessungen des Sensorsystems und seines Gehäuses erzielen. Der Antrieb kann lineare oder drehende Bewegungen erzeugen, die in die vorbestimmten Bewegungen des Abtastkopfes umgesetzt werden.

Dabei ist es zweckmäßig, wenn die jeweilige Kalibrierfläche im Gehäuse versetzt zur Scheibe stationär oder im Wesentlichen stationär, sozusagen schwimmend, angeordnet ist.

In dem elektronischen NIR-Sensorsystem ist der Abtastkopf mit der Lichtquelle permanent geschützt im Gehäuse untergebracht, aus welchem er in der Abtastposition durch die lichtdurchlässige Scheibe die Scheibe passierendes Erntegut, Futter oder Futterbestandteile, das heißt eine Futtermischung abtastet. Zur Kalibrierung wird der Abtastkopf aus der definierten Abtastposition aktiv in die ebenfalls definierte Kalibrierposition zu der mindestens einen Kalibrierfläche bewegt, wobei er in der Kalibrierposition unter gleichen optischen und geometrischen Bedingungen relativ zur Kalibrierfläche angeordnet ist, wie in der Abtastposition relativ zur Scheibe. Dabei ist es wichtig, dass das Erscheinungsbild der jeweiligen Kalibrierfläche verschieden ist vom variierenden Erscheinungsbild des beleuchteten Ernteguts, Futters oder der Futterbestandteile an der Scheibe, um beim Kalibrieren präzise einen bestimmten festen Referenzwert, z.B. elektronisch, zu ermitteln und mit dessen Hilfe das Sensorsystem zur präzisen und aussagekräftigen Abtastung des Futters einzustellen und z. B. mit den Messresultaten und einer modernen Datenverarbeitung einen Futtermischprozess präzise zu steuern. Baulich einfach ist dabei der Abtastkopf im Gehäuse mittels eines, vorzugsweise elektrischen oder elektromechanischen, Antriebs schwenkbar oder umfänglich oder taumelnd oder exzentrisch drehbar oder linear verschiebbar, und gegebenenfalls dabei heb- und absenkbar. Diese Bewegungsarten sind einfach steuerbar und ermöglichen über lange Standzeiten die jeweils exakte reproduzierbare Positionierung des Abtastkopfes. Andere Bewegungsmuster als die erwähnten sind ebenfalls möglich. Damit lassen sich auch kompakte Abmessungen des Sensorsystems und seines Gehäuses erzielen. Der Antrieb kann lineare oder drehende Bewegungen erzeugen, die in die vorbestimmten Bewegungen des Abtastkopfes umgesetzt werden.

Bei dem Verfahren wird der Abtastkopf als Ganzes aktiv zwischen den Positionen hin und her verstellt und im Gehäuse jeweils präzise positioniert. Mit der Bewegung und relativen Positionierung des Abtastkopfes lassen sich reproduzierbar gleiche geometrische und optische Abtastbedingungen besser einstellen als bei einer Verstellung der Kalibrierfläche relativ zum stationären Abtastkopf oder Sensor.

In einer zweckmäßigen Ausführungsform sind mindestens zwei voneinander verschiedene, separate Kalibrierflächen vorgesehen, beispielsweise eine weiße und eine gelbe, deren jede jedoch durch die gewählte Einfärbung verschieden ist vom Erscheinungsbild des abzutastenden Futters hinter der Scheibe. Beispielsweise wird dafür gesorgt, z.B. mit einer Abschirmung, dass eventuelles Störlicht aus der Scheibe die Kalibrierung nicht beeinflusst, da die Kalibrierung auch in Abwesenheit von Erntegut, Futter oder Futterbestandteilen vorbereitend zu oder nach einem Mischprozess durchgeführt wird.

Wichtig ist, dass in der Kalibrierposition der Abstand und der Ausrichtwinkel, z.B. exakt 90°, des Sensors von der und zur Kalibrierfläche dem Abstand und Ausrichtwinkel des Sensors von der und zur Außenseite der Scheibe in der Abtastposition zumindest weitestgehend entsprechen. Auf diese Weise wird sichergestellt, dass beim Kalibrieren dieselben optischen Bedingungen für den Sensor gegeben sind, wie beim Abtasten. Zwei Kalibrierflächen mit unterschiedlichen Erscheinungsbildern lassen die Qualität der Kalibrierung verbessern, weil mehr als nur ein exakt vorbestimmtes Lichtwellen-Spektrum verfügbar und für die weitere Verarbeitung verwertbar ist.

Günstig wird der Abtastkopf um eine im Gehäuse festgelegte, z.B. zur Scheibe zumindest in etwa parallele Achse hin- und hergeschwenkt, beispielsweise mittels eines elektrischen Motors mit oder ohne Zahnräder. Die unterschiedlichen Positionen des Abtastkopfes können einfach durch mechanische Anschläge im Gehäuse definiert werden, und/oder auf elektronischem Weg über den Motor. Beispielsweise ist die Kalibrierposition bei der weißen Kalibrierfläche eine sogenannte Parkposition, in der der Abtastkopf vor Betriebsaufnahme verharrt, z. B. um den Betrieb sofort mit der Abtastung dieser Kalibierfläche zu starten.

Der Abtastkopf kann alternativ entlang wenigstens einer Führungsschiene linear und parallel zur Scheibe geführt verschoben werden. Zweckmäßig sind zwei parallele Führungsschienen im Gehäuse verbaut, um den Abtastkopf stabil abzustützen. Zumindest eine Führungsschiene kann ein Zahnstangenprofil aufweisen, in das der Antriebsmotor mit einem Ritzel eingreift, wobei der Antriebsmotor am Abtastkopf verbaut sein kann. Die Scheibe und die jeweilige Kalibrierfläche sind hierbei zumindest im Wesentlichen auf gleicher Höhe im Gehäuse angeordnet.

Diese lineare Verstellung kann dadurch ergänzt sein, dass die Führungsschienen nicht nur lineare und zur Scheibe parallele Abschnitte aufweisen, sondern auch schräge Anhebe- und Absenk-Abschnitte mit einer dazwischenliegenden tiefsten Stelle (Wendepunkt), die beispielsweise die Abtastposition als Anschlag mechanisch definiert. In der angehobenen Position arbeitet der Abtastkopf mit einer Kalibrierfläche zusammen, die somit im Gehäuse höher platziert ist als die Scheibe. Dies resultiert in dem Vorteil, die Unterseite des Gehäuses ohne das Passieren des Futters behindernde Vorsprünge zum Platzieren der Kalibrierflächen eben zu gestalten, in welcher die Scheibe beispielsweise bündig, versenkt oder erhaben verbaut ist.

Alternativ kann der Abtastkopf in einer stationären Drehlagerung taumelnd drehbar sein, deren Drehachse gegenüber einer zur Scheibe Senkrechten schräg verläuft. Auch die vom Sensor definierte optische Achse des Abtastkopfes ist gegenüber der Drehachse der Drehlagerung schräg geneigt, derart, dass bei der Drehung des Abtastkopfes um die Drehachse die optische Achse nur in der vorbestimmten Futter-Abtastposition zum Zentrum der Scheibe senkrecht steht, und in jeder Kalibrierposition senkrecht zur Kalibrierfläche. Die jeweilige Kalibrierfläche ist relativ zur Scheibe schräg gestellt und höher angeordnet, angepasst an die taumelnde Bewegung, und ist, vorzugsweise, im Wesentlichen auf eine Kreuzung der Drehachse mit der optischen Achse ausgerichtet.

Bei sämtlichen Bewegungsarten für den Abtastkopf kann es zweckmäßig sein, die Bewegungssteuerung so anzuordnen, dass sie möglichst wenig durch Fliehkräfte eines das Sensorsystem tragenden rotierenden Werkzeugs beeinflusst wird. Ferner kann der Abtastkopf in der jeweiligen Position durch einen mechanischen Anschlag gegen eine unkontrollierte Verlagerung im Falle eines Notstopps des rotierenden Werkzeugs gesichert werden.

Ferner kann der Abtastkopf in einer zu einer Senkrechten auf die Scheibe parallelen, seitlich gegenüber der Scheibe versetzten Drehlagerung mit einer zur Senkrechten parallelen Drehachse aktiv gedreht werden. Dabei hat jede Kalibrierfläche und auch die Scheibe in etwa den gleichen Radialabstand von der Drehlagerung, und können die Scheibe und die Kalibrierflächen auf gleicher Höhe und zueinander parallel liegen.

Ferner ist es alternativ möglich, den Abtastkopf in einer gegenüber dem Zentrum der Scheibe exzentrischen Drehlagerung mit einer zu einer Senkrechten auf die Scheibe parallelen Drehachse aktiv zu drehen. Auch hier befinden sich die Scheibe und jede dazu parallele und auf gleicher Höhe liegende Kalibrierfläche in etwa im gleichen Radialabstand von der Drehachse der Drehlagerung.

Um die jeweilige Kalibrierfläche parallel zur Scheibe aber höher als diese anordnen zu können, um einen außenseitig ebenen Gehäuseboden zu erhalten, kann es zweckmäßig sein, wenn der Abtastkopf in den beiden vorerwähnten Ausführungsformen in der Drehlagerung auf- und abverschiebbar geführt ist. Eine am Abtastkopf angeordnete Tastrolle läuft z. B. auf einer stationären Steuerkurve im Gehäuse und überträgt Hebe- und Absenkbewegungen auf den Abtastkopf, wenn dieser um die Drehachse der Drehlagerung bewegt wird. Die Steuerkurve hat ausgehend von einer die Abtaststellung z. B. mechanisch definierenden Vertiefung wenigstens einen Anstieg zu einem die Kalibrierposition definierenden Plateau für die Tastrolle.

Die jeweilige Kalibrierfläche ist zweckmäßig an der Außenseite einer lichtdurchlässigen Scheibe platziert, die der Abtast-Scheibe, insbesondere in ihren optischen Eigenschaften, der vorzugsweise runden Form, und den Abmessungen zumindest weitestgehend gleich ist, um im Wesentlichen gleiche optische Voraussetzungen beim Abtasten und beim Kalibrieren sicherzustellen. Die Kalibrierflächen können alternativ sogenannte Kacheln mit beliebiger Umrissform sein, z. B. mit weißen oder gelben, glänzenden oder matten Oberflächen.

Das Gehäuse mit einem runden, polygonalen oder ovalen Domoberteil und einem weitgehend ebenen Boden, der mit dem Domoberteil und z.B. dem das Futter bearbeitenden Werkzeug verschraubt sein kann, ist an der gewünschten Messstelle verbaut. Für genaue Mess- und Abtastergebnisse ist es zweckmäßig, wenn der Sensor und die Lichtquelle in der Scheibe und der Kalibrierfläche nur einen runden Kernbereich mit beispielsweise etwa 10 mm Durchmesser abtasten, obwohl die Scheibe und Kalibrierfläche größer als dieser Kernbereich sind und beliebige Form besitzen.

Um zu vermeiden, dass in Abwesenheit von Futter Störlicht durch die Scheibe beim Kalibrieren Einfluss nimmt, ist es zweckmäßig, wenn im Inneren des Gehäuses eine Trennwand vorgesehen ist, beispielsweise ein schwarzer Gummi- oder Kunststoff-Rahmen oder ein Profil als Einfassung der Scheibe und/oder der Kalibrierfläche und/oder des Abtastkopfes. Diese Trennwand ist elastisch, so dass sie sich bei den Relativbewegungen des Abtastkopfes verformen lässt und sich zurückstellt, um zuverlässig abzuschirmen.

Günstig ist es ferner, wenn das Sensorsystem eine integrierte Heizvorrichtung und/oder eine Kühlvorrichtung aufweist, um eine optimale Sensor-Betriebstemperatur einstellen oder halten zu können.

Im Übrigen kann die Scheibe eine von einem Kreiszylinder abweichende Form, vorzugsweise mit einem Versatz und/oder einer Anschrägung aufweisen und formschlüssig festgelegt sein. Die Scheibe wird zweckmäßig in einem zum Scheibentausch von außen lösbar, vorzugsweise bündig, im Boden des Gehäuses montierten Rahmen untergebracht. Sicherheitshalber könnte die Scheibe zweiteilig aus einer äußeren vom Futter kontaktierten Scheibe und einer inneren, auch das Gehäuse abschließenden Scheibe bestehen, die beide separat lagegesichert sind. Die äußere Scheibe mit ihrer Halterung unterliegen Verschleiß und können sich bei mangelhafter Wartung lösen und ins Futter gelangen. Die innere Scheibe verhindert ein Eindringen von Futter ins Gehäuse. Außerdem registriert der Sensor über die sprunghafte optische Änderung den Verlust der äußeren Scheibe, und kann über eine Programmroutine eine Warnung gegeben werden, diese Futtermischung nicht mehr zu verfüttern.

Eine bevorzugte Ausführungsform der Vorrichtung zeichnet sich dadurch aus, dass das jeweilige Sensorsystem beziehungsweise sein Gehäuse an oder in dem Erntegut, Futter oder - Komponenten bearbeitenden, antreibbaren Werkzeug mit diesem mitbewegbar angeordnet ist, beispielsweise in oder an einer Mischschnecke eines Futtermischers. Die Leistungsversorgung und/oder Signalübertragung zum und vom Sensorsystem kann über Schleifkontakte, Kabel oder kabellos, z. B. induktiv z. B. über zusammenwirkende Spulen erfolgen. Das Sensorsystem könnte auch eine Batterie und zweckmäßig an wenigstens einer Platine eine Hardware-Ausstattung besitzen, mit der der Betrieb und/oder eine Messwert-Auswertung durchführbar sind.

Da bestimmte Futterbestandteile, z.B. Zucker, die Außenseite der Scheibe mit der Zeit verschmutzen und eine einwandfrei Abtastung erschweren, kann es zweckmäßig sein, dem Sensorsystem eine fernbetätigbare Sprühvorrichtung mit einem Speicherbehälter, einer Pumpe und wenigstens einer am Boden des Gehäuses montierten Sprühdüse zuzuordnen. Die Scheibe kann so beispielsweise vor und/oder nach dem Mischprozess vorsorglich oder im Fall einer vom Sensorsystem auf optischem Weg festgestellten, kritischen Verschmutzung gereinigt werden.

Das selbstkalibrierende Sensorsystem kann nämlich nicht nur zum quantitativen Ermitteln von Futterbestandteilen oder des Mischungsgrades beim Mischprozess eingesetzt werden, sondern unter Nutzen der wenigstens einen Kalibrierfläche auch zum Ermitteln eines Verschmutzungsgrades der Scheibe. Dann kann die Sprühvorrichtung betätigt oder eine Warnung abgegeben werden. Um eine Verschmutzung der Scheibe zu beseitigen, könnte beispielsweise alternativ in einem Futtermischer vorsorglich vor Beginn des Mischprozesses Wasser oder eine Reinigungsflüssigkeit eingebracht werden. Die Reibung des Futters an der Außenseite der Scheibe sorgt dann für die Reinigung.

Die Erfindung umfasst auch ein Verfahren zum Verwenden des Sensorsystems bei der Bearbeitung oder Verarbeitung von Erntegut, Futter und Futter-Bestandteilen unter Nutzen moderner Datenverarbeitungs-Technologien, z. B zum quantitativen Ermitteln von Futterbestandteilen und Feststellen des Mischungsgrades und jeweils zur präzisen Steuerung des Mischprozesses.

Verfahrensgemäß wird der Abtastkopf in mehr als eine Kalibrierposition zu einer ersten und mindestens einer zweiten Kalibrierfläche bewegt, um die Genauigkeit der Kalibrierung zu erhöhen und eben mehrere Messergebnisse unterschiedlich auswerten zu können.

Die jeweilige Kalibrierfläche wird bei dem Verfahren kontinuierlich zwischen etwa 2 und 10 Sekunden gescannt, im um Fluktuationen zu kompensieren und Vergleiche präzise zu bewerten.

Die Scheibe wird in der Abtastposition getaktet, z. B. 50 Mal pro Sekunde, gescannt, um beim Mischprozess den Mischungsgrad repräsentierende Variationen des Erscheinungsbildes an der Scheibe besser abzubilden. Dabei kann aus einer vorbestimmten Anzahl letzter Scans ein Musterspektrum errechnet und weiterverarbeitet werden.

Anhand der Zeichnung werden Ausführungsformen des Erfindungsgegenstandes erläutert. Es zeigen:
- Fig. 1: einen Längsschnitt eines Futtermischers als nicht beschränkendes Beispiel einer Vorrichtung mit einem elektronischen Sensorsystem hier z. B. an einem Erntegut, Futter oder Futterkomponenten bearbeitenden Werkzeug,
- Fig. 2: das Werkzeug von Fig. 1, z.B. eine vertikale Mischschnecke des Futtermischers,
- Fig. 3: einen Längsschnitt des elektronischen Sensorsystems in einer Abtastposition,
- Fig. 4: eine Detailansicht zu Fig. 3,
- Fig. 5: einen Längsschnitt in einer Kalibrierposition,
- Fig. 6: eine weitere Ausführungsform in einer Abtastposition,
- Fig. 7: eine zugehörige Kalibrierposition,
- Fig. 7a: einen vergrößerten Ausschnitt aus Fig. 7,
- Fig. 8: einen um 90° gedrehten Schnitt zu Fig. 6,
- Fig. 9: ein Detail einer weiteren Ausführungsform,
- Fig. 10: die zugehörige Abtastposition,
- Fig. 11: die zugehörige Kalibrierposition,
- Fig. 12: eine weitere Ausführungsform in der Abtastposition,
- Fig. 13: die zugehörige Kalibrierposition,
- Fig. 14: eine Perspektivansicht einer weiteren Ausführungsform in der Abtastposition, und
- Fig. 15: eine weitere Ausführungsform in der Abtastposition.

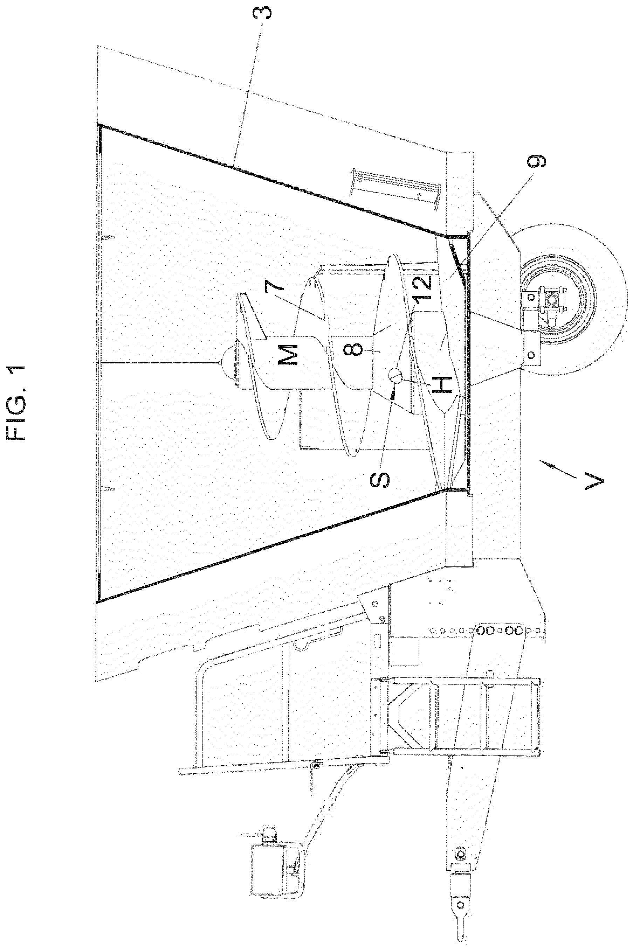

Fig. 1 zeigt nicht beschränkendes Beispiel einer Vorrichtung V zum Bearbeiten von Erntegut, oder Tierfutter- oder -komponenten einen fahrbaren oder stationären Futtermischer in beliebiger Form, z. B. einen Futtermischwagen. Alternativ könnte die Vorrichtung V eine Erntegut- oder Futter-Ladeeinrichtung oder eine ähnliche Einrichtung, z. B. ein Ladewagen, Häcksler oder dergleichen zum Bearbeiten oder Verarbeiten von Erntegut oder Futter sein.

In Fig. 1 ist in einem Mischbehälter 3 wenigstens ein antreibbares Werkzeug M, beispielsweise eine vertikale Mischschnecke, vorgesehen, die in dieser Ausführungsform an einem Kernrohr 8 eine Schneckenwendel 7 und z.B. bodenseitige Rührflügel oder Aufnahmeleisten 9 aufweist. Alternativ könnte das Werkzeug M eine horizontale Schnecke, eine Rührwelle, eine Mischkette, oder Ähnliches sein.

An oder in dem Werkzeug M ist an wenigstens einer Messstelle 12 ein elektronisch betreibbares NIR-Sensorsystem S mit einem Abtastkopf H verbaut, der in einem Gehäuse 5 hinter einer vom Futter zu passierenden lichtdurchlässigen Scheibe 1 platziert ist. Das Sensorsystem S kann nicht nur mit einem Werkzeug M mitbewegbar eingesetzt werden, sondern auch stationär, z.B. an der Mischbehälterwand, einer Ausdosiervorrichtung, einem Leitkegel des Futtermischers oder dergleichen. Das Sensorsystem S ist ein elektronisches NIR-Sensorsystem, das mit NIR-Licht und dessen Reflexion aus dem Futter auf spektrometrischem Weg zumindest zuzumischende Futterbestandteile und/oder den Mischungsgrad ermitteln lässt. Die Bestandteile können beispielsweise neben Zellstoff, Eiweiß, Trockenmasse, Zucker, Stärke, Asche und andere Zutaten sein.

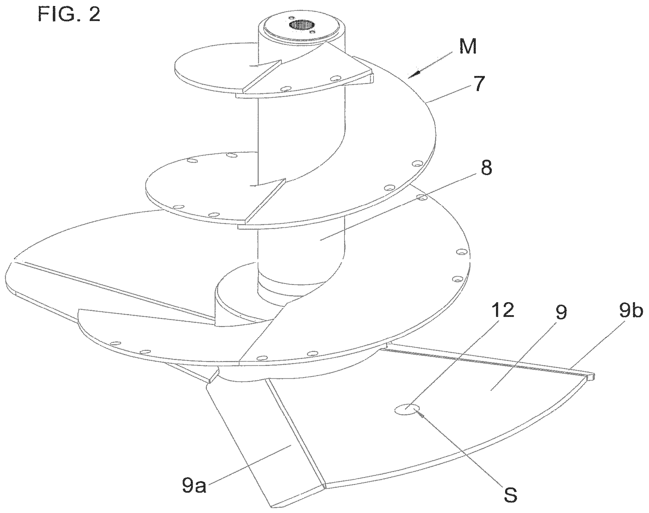

Fig. 2 zeigt im vergrößerten Maßstab das Werkzeug M von Fig. 1, dessen optionaler Rührflügel 9 hier vordere und hintere abfallende Teile 9a, 9b besitzt. Zumindest ein Sensorsystem S ist mit dem Gehäuse 5 in einem Ausschnitt eines Rührflügels 9 hinter der Scheibe 1 verbaut.

Am Werkzeug M können mehrere Sensorsysteme S verbaut sein.

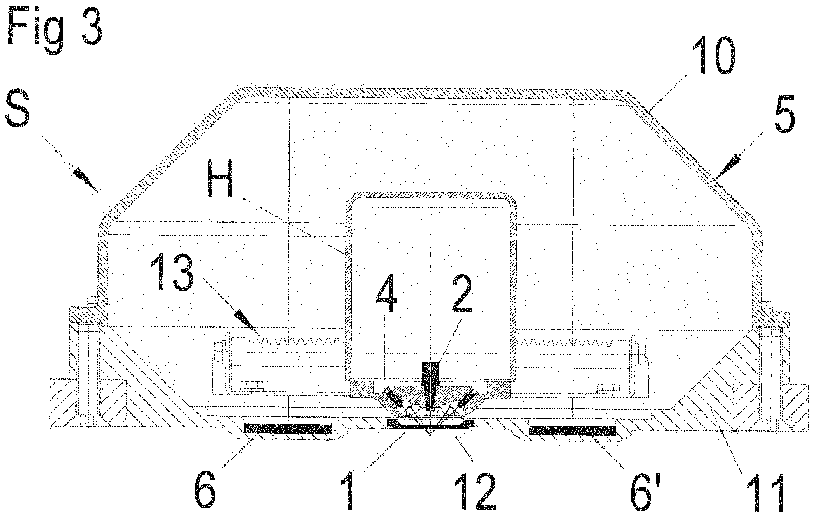

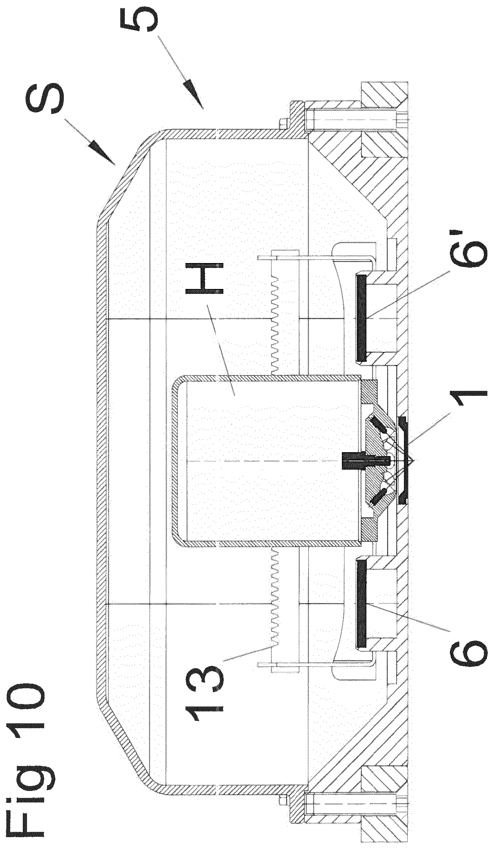

In den Fig. 3 bis 15 werden unterschiedliche Ausführungsformen von beispielsweise auch in der Vorrichtung V der Fig. 1 und 2 verwendbaren NIR-Sensorsystemen gezeigt.

Das Sensorsystem S in den Fig. 3 bis 5 hat ein Gehäuse 5 mit einem domförmigen, hier z.B. ovalen Oberteil 10 und im Wesentlichen ebenen Boden 11, die miteinander und in einem Ausschnitt, z.B. der Wendel 7 oder des Rührflügels 9 verschraubt sind und den Abtastkopf H aufnehmen. Im Abtastkopf H ist mindestens eine NIR-Lichtquelle 4 vorgesehen (vorzugsweise mehrere in Umfangsrichtung verteilte Lichtquellen) sowie ein spektrometrischer Sensor 2. Die Lichtquelle und der Sensor 2 sind in einer Abtastposition auf die im Boden 11 an der Messstelle 12 angeordnete Scheibe 1 ausgerichtet, z.B. mit einem Ausrichtwinkel α des Sensors 2 von 90°, während sich die Lichtquellen seitlich unter schrägen Winkeln auf einen Kernbereich der Scheibe 1 konzentrieren, so dass nur ein runder Kernbereich von etwa 10 mm Durchmesser abgetastet wird, obwohl die Scheibe 1 größer ist.

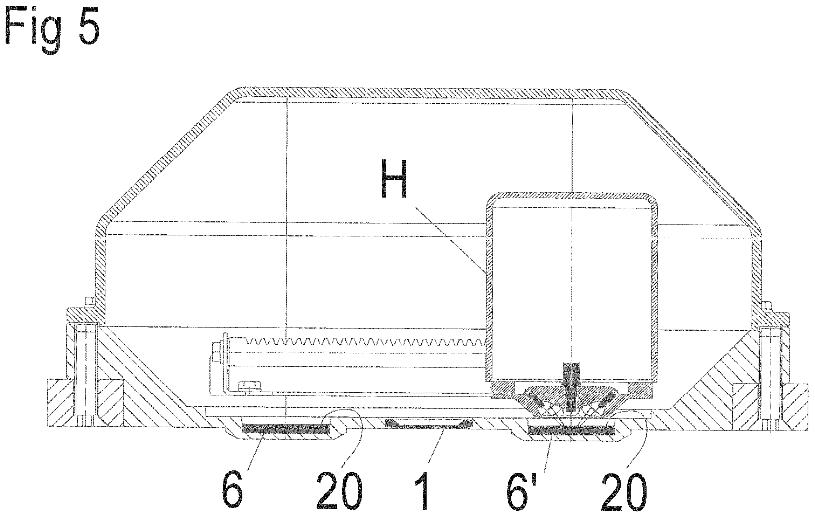

Das Gehäuse 5 enthält einen stationären Bewegungsantrieb 13 für den Abtastkopf H, und zwar hier zwei parallele Führungsschienen 14, die geradlinig parallel zur Scheibe 1 verlaufen und auf Konsolen 18 am Boden 11 abgestützt sind. Zumindest eine Führungsschiene trägt ein oberseitiges Zahnstangenprofil 15 für einen Zahnradantrieb 17 mit einem elektrischen Antriebsmotor 16 am Abtastkopf H. Die Konsole 18 bildet jeweils einen mechanischen Anschlag 19 zur Definition, hier einer Kalibrierposition, in der der Abtastkopf H auf eine zur Scheibe 1 versetzte auf gleicher Höhe liegende Kalibrierfläche 6' in Fig. 5 ausgerichtet ist. Optional sind zwei Kalibrierflächen 6, 6' zur Scheibe 1 versetzt stationär im Boden 11 verbaut. In der jeweiligen Kalibrierposition steht der Abtastkopf H unter einem Winkel von 90° mit einem Hochabstand x zur Kalibrierfläche 6, 6', genau wie in der Abtastposition relativ zur Scheibe 1, so dass zum Kalibrieren und zum Abtasten zumindest weitestgehend identische optische und geometrische Konditionen für den Abtastkopf H vorliegen.

In Fig. 5 ist jede Kalibrierfläche 6, 6' z. B. hinterseitig an einer lichtdurchlässigen Scheibe 20 platziert, die zumindest weitestgehend der Scheibe 1 entspricht, um identische optische Voraussetzungen zu erfüllen. Alternativ könnten die Kalibrierflächen sogenannte Kacheln sein.

Jede Kalibrierfläche 6, 6' hat ein Erscheinungsbild, das verschieden ist vom Erscheinungsbild des Ernteguts, Futters oder der -komponente hinter der Scheibe 1. Beispielsweise sind die Kalibrierflächen 6, 6' mit unterschiedlichen Einfärbungen versehen, z.B. weiß und gelb. In der Kalibrierposition wird jeweils nur ein Kernbereich von etwa 10 mm abgetastet, obwohl die Flächen 6, 6' größer sind.

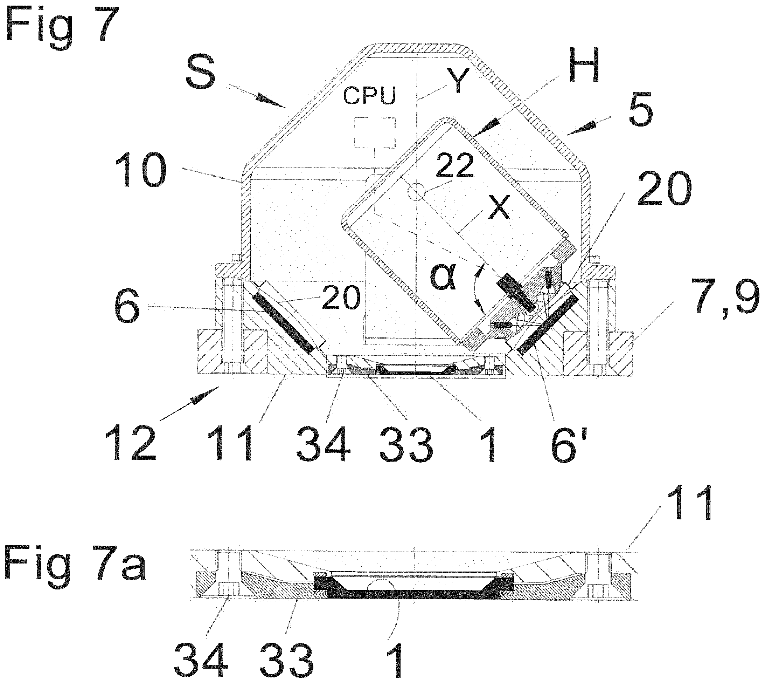

Ein Kalibriervorgang wird über eine nicht dargestellte elektronische Betätigungssteuerung, z.B. CPU in Fig. 7, des Sensorsystems S durchgeführt, indem der Abtastkopf H vom Antriebsmotor 16 (Drehmotor oder Linearmotor) in eine Kalibrierposition im Gehäuse 5 gestellt wird oder ist und das vorbestimmte und bekannte NIR-Reflexionsverhalten der Kalibrierfläche 6, 6' abtastet. Beispielsweise wird dann bei einer Änderung der Lichtqualität der Lichtquelle 4 die Abweichung von bekannten NIR-Reflexionsverhalten zum Anlass genommen, eine Nachjustierung beispielsweise der Lichtstärke vorzunehmen. Durch zwei Kalibrierflächen 6, 6' mit verschiedenen Erscheinungsbildern wird die Qualität der Kalibrierung verbessert. Die Kalibrierflächen 6, 6' verbessern auch die Möglichkeiten der Weiterverarbeitung von Abtastergebnissen bei der Verarbeitung von Erntegut, Futter- oder Futterkomponenten z. B. zur Herstellung einer gewünschten Futtermischung, wie später erläutert wird.

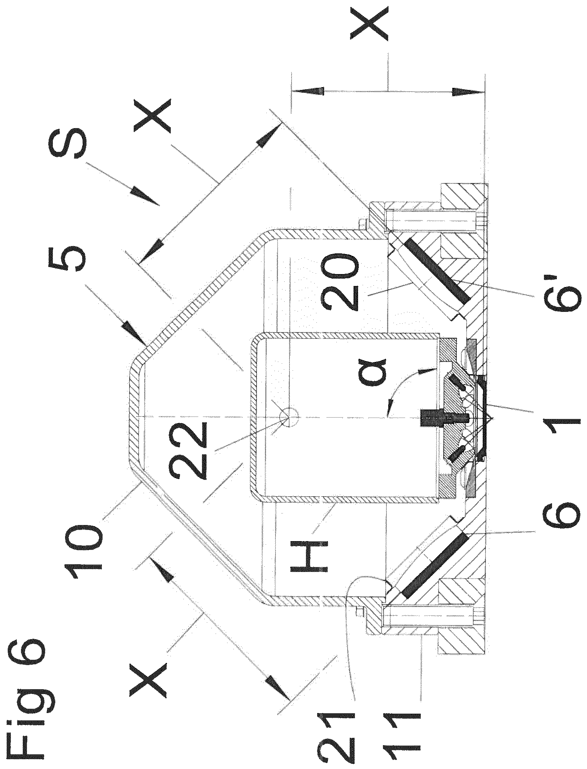

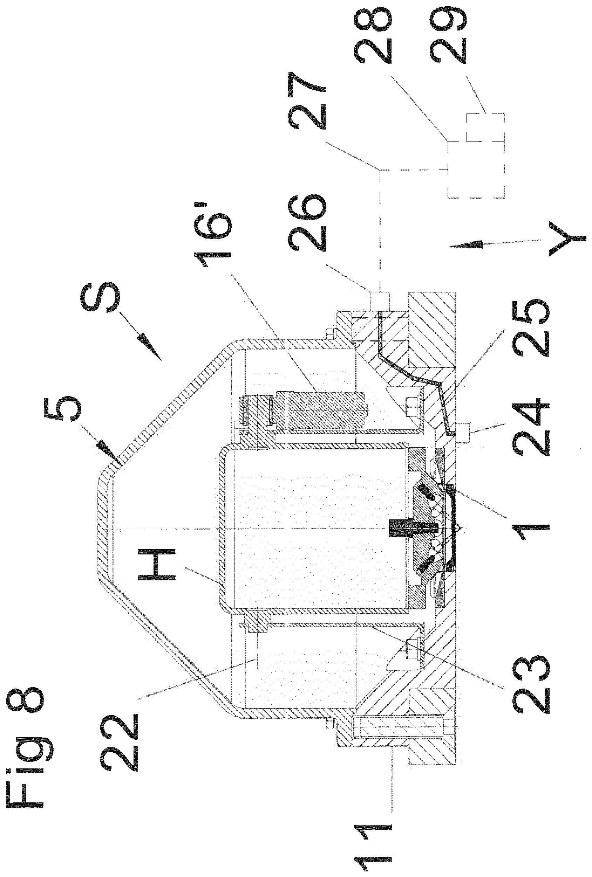

Das Gehäuse 5 der Ausführungsform der Fig. 6, 7, 7a und 8 hat im Unterschied einen domförmigen runden Oberteil 10 und den Boden 11, dessen Unterseite durchgehend plan (oder ohne Vorsprünge gewölbt) ist. Die Außenseite der Scheibe 1 kann bündig mit der Unterseite des Bodens 11 oder versenkt oder erhaben, gegebenenfalls sogar angeschrägt sein. Die Kalibrierflächen 6, 6' sind versetzt zur Scheibe 1 im Boden höher als die Scheibe 1 und in einer Schräglage stationär platziert, und zwar ausgerichtet auf eine zur Scheibe 1 parallele Achse 22, die am Boden 11 mit Konsolen 23 abgestützt ist und um welche der Abtastkopf H mittels des Antriebsmotors 16' zwischen der in Fig. 8 gezeigten Abtastposition und jeweils einer in Fig. 7 gezeigten Kalibrierposition aktiv schwenkbar ist. Jede Kalibrierflächen 6, 6' kann durch eine lichtdurchlässige Scheibe 20 abgedeckt sein, die annähernd gleich der Scheibe 1 ist. Gegebenenfalls sind Trennwände 21 (Fig. 6) beispielsweise in Form schwarzer Gummi- oder Kunststoffrahmen der Kalibrierflächen 6, 6' und/oder der Scheibe 1 und/oder des Abtastkopfes H verbaut, die beim Kalibrieren in der jeweiligen Kalibrierposition eine Beeinflussung durch Streulicht oder Störlicht durch die Scheibe 1 vermeiden, und die z.B. beim Verschwenken des Abtastkopfes H elastisch verformbar sind und sich selbsttätig rückstellen.

In den Abtast- und Kalibrierpositionen liegen gleiche geometrische Verhältnisse vor, d.h. der Ausrichtwinkel α und der Abstand x der Achse 22 sind identisch.

Die Scheibe 1 ist allen Ausführungsformen nicht notwendigerweise kreisrund und gleichmäßig dick, sondern z.B. unrund oder polygonal, kann vertieft oder abgeschrägt sein, und sitzt in den Fig. 7, 7a formschlüssig fixiert in einem Rahmen 33 aus verschleißfestem Material, der zum Austausch der Scheibe 1, von außen in einem Ausschnitt des Bodens 11 des Gehäuses 5 abnehmbar mit Schrauben 34 festgelegt ist. Die Scheibe 1 könnte aus einer inneren und einer äußeren Scheibe bestehen, die separat festgelegt sind, sodass bei Verlust der äußeren Scheibe mit ihrem Rahmen 33 das Gehäuse 5 durch die innere Scheibe sicher verschlossen bleibt.

Zumindest die beiden Kalibrierpositionen in den Fig. 6 bis 8 können mechanisch durch nicht dargestellte Anschläge definiert sein, oder auf elektrischem Weg über den Antriebsmotor 16'. Die Kalibrierposition des Abtastkopfes H, beispielsweise ausgerichtet auf die weiße Kalibrierfläche 6, kann eine vorbestimmte Parkposition des Sensorsystem S sein, in der dieser bis zur jeweiligen Betriebsaufnahme des Werkzeugs W oder der Vorrichtung V verharrt.

Fig. 8 deutet eine Option dieser Ausführungsform und auch der anderen Ausführungsformen an, nämlich eine Sprühvorrichtung B, um die Scheibe 1 an ihrer Außenseite bedarfsabhängig reinigen zu können, z.B. falls diese, z.B. durch Zucker, verklebt oder verschmiert sein sollte und die ordnungsgemäße Abtastung des Futters oder der Futterkomponenten beeinträchtigt ist. Der Verschmutzungsgrad der Scheibe 1 ist z.B. durch einen elektronischen Vergleich der Erscheinungsbilder (der Lichtspektren) der verschmutzten Scheibe 1 und wenigstens einer Kalibrierfläche 6, 6' feststellbar. Dies wird z.B. vor, am Beginn, vor dem Ende oder nach einem Mischprozess oder in regelmäßigen Abständen durchgeführt. Das Resultat kann eine Warnung sein, oder die Aufforderung oder Ausführung einer Reinigung der Scheibe 1. Z. B. wird der Sensorkopf H in die Abtastposition gestellt, ehe Futter oder sobald etwas oder nur noch wenig Futter vorliegt. Sobald der Sensor 2 Licht feststellt, wird die Sprühvorrichtung R aktiviert.

Reicht der Druck der Reinigung, wird die Scheibe 1 aktiv gesäubert. Andernfalls reinigt das Futter mit der Flüssigkeit durch Reibung die Scheibe 1.

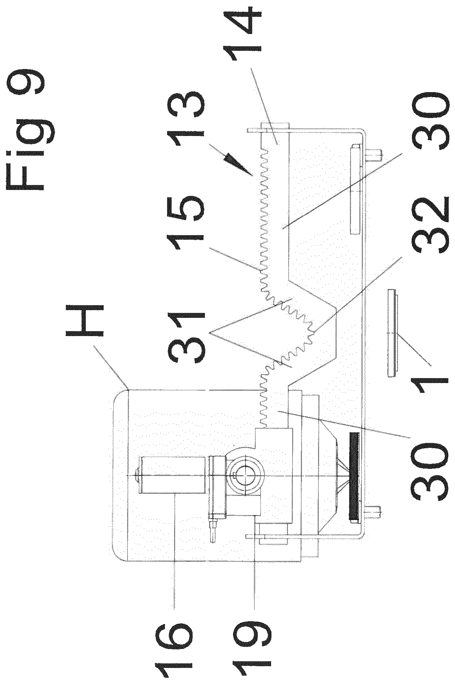

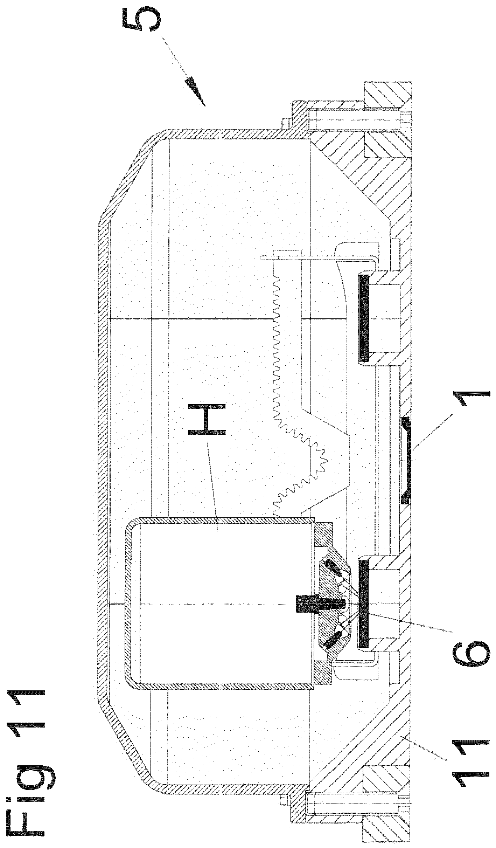

Die Ausführungsform der Fig. 9 bis 11 ähnelt der der Fig. 3 bis 5. Das Gehäuse 5 hat den ovalen domförmigen Oberteil 10 und den hier an seiner Unterseite ebenen Boden 11. Die zwei im Boden 11 verbauten Kalibrierflächen 6, 6' sind parallel zur Scheibe 1, zwecks der ebenen Bodenunterseite jedoch höher platziert als die Scheibe 1, die beispielsweise mit ihrer Außenseite in etwa bündig mit der Bodenunterseite ist. Der Bewegungsantrieb 13 umfasst zwei parallele Führungsschienen 14. Jede Führungsschiene 14 hat parallel zur Scheibe 1 verlaufende gerade Abschnitte 30 sowie hier mittige Absenk- und Anhebeabschnitte 31, die eine tiefste Stelle 32 (Wendepunkt, mechanischer Anschlag für die Abtastposition) definieren. In der in Fig. 11 gezeigten, z.B. durch einen mechanischen Anschlag 19 definierten Kalibrierposition an der Kalibrierfläche 6 befindet sich hingegen der Abtastkopf H auf dem höher liegenden geraden Abschnitt 30 der Führungsschienen 14.

Die als Option in Fig. 8 angedeutete Sprühvorrichtung P weist wenigstens eine Sprühdüse 24 hier an der Unterseite des Bodens 11 auf, deren Sprührichtung gegen die Außenseite der Scheibe 1 orientiert ist, sowie z.B. einen Kanal 25 im Boden 11 zu einem außenliegenden Anschluss 26, eine Verbindungsleitung 27 zu einem Speicherbehälter 28 für ein Reinigungsmedium, sowie eine an den Speicherbehälter 28 angeschlossene, z.B. über die Steuerung CPU aktivierbare Pumpe 29.

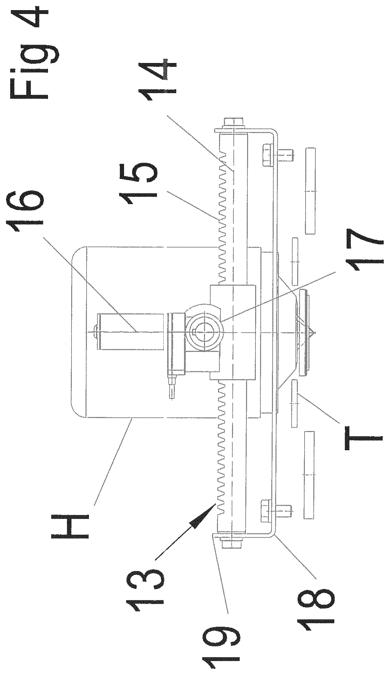

Eine weitere Option für alle Ausführungsformen ist eine dem Sensorsystem S z.B. im Gehäuse 5 zugeordnete Heizvorrichtung und/oder Kühlvorrichtung T, z.B. angedeutet in Fig. 4, zum Einstellen und/oder Halten einer optimalen Betriebstemperatur des Sensors 2 und seiner Elektronik. Die Vorrichtung V kann bei ungünstiger Witterung draußen stehen, so dass die Scheibe 1 mit Eis, Schnee, Kondenswasser oder Restfutter bedeckt ist. Die dann typischen Spektren, die der Sensor 2 feststellt, werden gespeichert, um festzustellen, ob es sich um eine normale, nicht störende Verschmutzung handelt, oder ob eine Reinigung erforderlich ist.

Der Sensor 2 sollte eine Temperatur von mindestens z. B. etwa 4° C haben, damit er einwandfrei funktioniert. Wird die Abtastposition eingestellt, kann die länger eingeschaltete Lichtquelle 4 Wärme zum Entfernen von Kondenswasser und Eis von der Scheibe 1 erzeugen. Alternativ oder additiv kann bei niedrigen oder hohen Temperaturen die Heizvorrichtung oder Kühlvorrichtung (z. B. ein Lüfter oder ein passives thermoelektrisches Element, wie ein Peltier-Element, dessen kälterer Teil z. B. beim Boden im Gehäuse 5 und dessen wärmerer Teil außerhalb des Gehäuses 5 platziert sein kann.) T eingeschaltet werden. Das Gehäuse 5 besitzt im Übrigen wegen unvermeidbarer Temperaturunterschiede eine Entlüftung.

Die Bewegungsantriebe 13 des Abtastkopfes H in den gezeigten Ausführungsformen werden zweckmäßig so angeordnet, dass sie möglichst wenig Fliehkräften des das Sensorsystem S tragenden, rotierenden Werkzeugs M um dessen Drehachse ausgesetzt sind. Der jeweilige mechanische Anschlag sollte den Abtastkopf im Fall eines Notstopps eines rotierenden, das Sensorsystem tragenden Werkzeugs gegen eine unkontrollierte Verlagerung zuverlässig stützen.

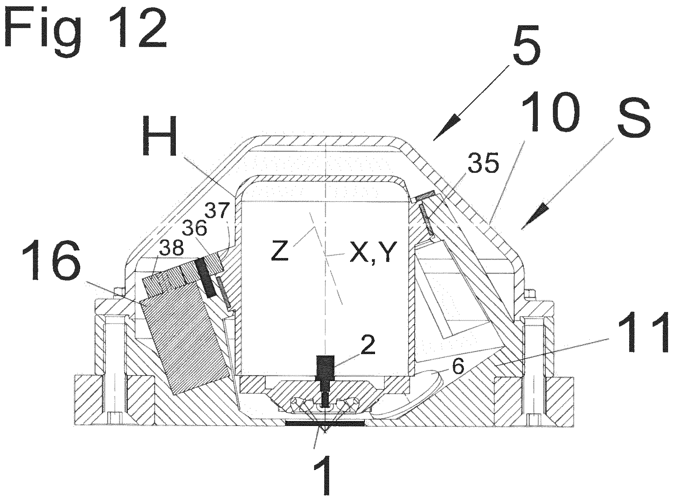

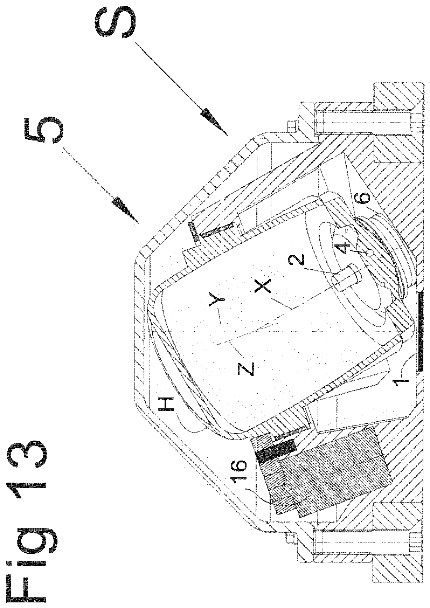

In der Ausführungsform der Fig. 12 und 13 ist der Abtastkopf H im Gehäuse 5 zwischen der Abtast- und der jeweiligen Kalibrierposition durch den Antriebsmotor 16 taumelnd bewegbar. Und zwar ist der Abtastkopf H mit der durch den Sensor 2 definierten optischen Achse x schräg in einem Teil des Gehäuses 5 des Abtastkopfes H in einer Drehlagerung 35 angeordnet, deren Drehachse Z schräg gegenüber einer Senkrechten auf die Scheibe 1 geneigt ist, beispielsweise unter einem Winkel von etwa 30°. Der hier an der Drehlagerung 35 verbaute Antriebsmotor 16 treibt über ein Ritzel 38 ein Zwischenzahnrad 36, das in eine Verzahnung 37 des Gehäuseteils des Abtastkopfes H eingreift, um den Abtastkopf H um die Drehachse Z zu drehen, und zwar zwischen der in Fig. 12 gezeigten Abtastposition, in welcher die optische Achse X mit einer Senkrechten Y (auf die Scheibe 1) zusammenfällt, und einer Kalibrierposition gemäß Fig. 13, in der der Abtastkopf H beispielsweise auf die Kalibrierfläche 6 ausgerichtet ist, die im Gehäuse 5 schräg geneigt und auf beispielsweise die Kreuzung zwischen der Drehachse Z, der Senkrechten Y und der optischen Achse X ausgerichtet ist. Die Kalibrierposition bei weiß ist beispielsweise auch die Parkposition des Sensorsystems S vor Betriebsaufnahme. Falls eine zweite Kalibrierfläche 6' vorgesehen ist, ist diese ähnlich wie die Kalibrierfläche 6 im Gehäuse 5 schräg angeordnet, so dass sie auf die erwähnte Kreuzung ausgerichtet ist. Die beiden Kalibrierpositionen und die Abtastposition können beispielsweise relativ zueinander um jeweils 120° versetzt sein, und befinden sich in gleichen Radialabständen vom Zentrum des hier beispielsweise kreisrunden Bodens 11 des Gehäuses 5.

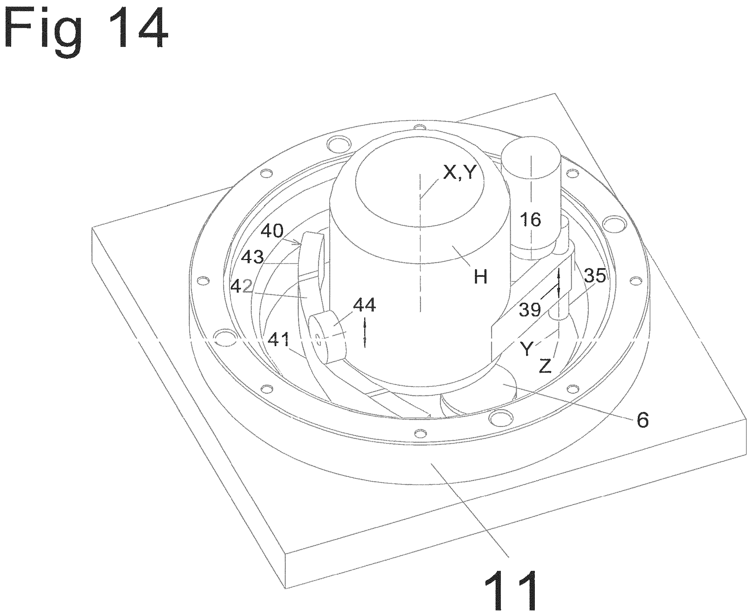

Die Ausführungsform der Fig. 14 hat die Drehlagerung 35 mit der Drehachse Z beispielsweise einen vertikalen Bolzen an einer Seite des hier runden Bodens 11. Der Abtastkopf H ist in Fig. 14 in der Abtastposition, wobei die optische Achse X und die Senkrechte Y auf das Zentrum der Scheibe 1 zusammenfallen. Er ist mit einem Ausleger in der Drehlagerung 35 durch den Antriebsmotor 16 verschwenkbar, wobei (nicht gezeigt) die Scheibe 1 und die Kalibrierflächen 6, 6' im Boden 11 in gleicher Höhe verbaut sein können. Zusätzlich hat jedoch die Ausführungsform in Fig. 14 eine am Boden 11 verbaute Steuerkurve 40 für eine am Abtastkopf H angeordnete Tastrolle 44, mit einer mittleren Vertiefung 41 (zur Definition der Abtastposition), und davon ausgehende Anstiege 42 zu höherliegenden Plateaus 43. Über die Tastrolle 44 und die Steuerkurve 40 wird abhängig von der Verschwenkung des Abtastkopfes H um die Drehachse Z der Drehlagerung 35 eine Auf- und Abwärtsbewegung (Doppelpfeil 39) erzeugt, und zwar für die gezeigte Ausführungsform, in der die Kalibrierflächen 6, 6' höher angeordnet sind als die Scheibe 1 (um eine ebene Bodenunterseite zu ermöglichen).

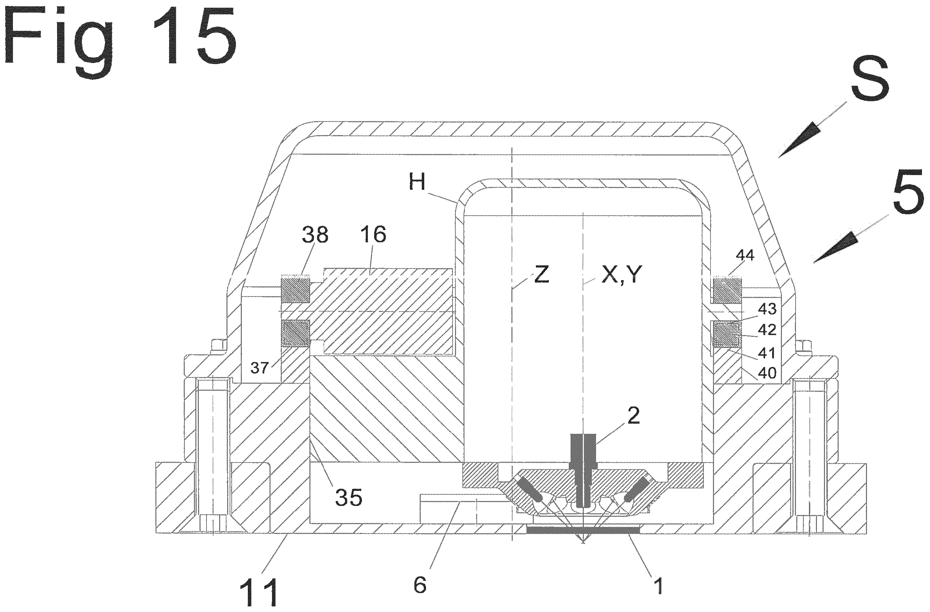

Die Ausführungsform der Fig. 15 hat im Boden 11 eine gegenüber der Scheibe 1 exzentrische Drehlagerung 35 für den Abtastkopf H, der ebenfalls exzentrisch in der Drehlagerung 35 aktiv drehbar angeordnet ist. Die Drehachse Z der Drehlagerung 35 ist parallel zur Senkrechten Y auf das Zentrum der Scheibe 1 und gegenüber dieser seitlich versetzt. Der am Abtastkopf H verbaute elektrische Antriebsmotor greift mit einem Ritzel 38 an einer Verzahnung 37 am Boden 11 an, die die Drehlagerung 35 umfänglich umgibt, um den Abtastkopf H aktiv zwischen der in Fig. 15 gezeigten Abtastposition (optische Achse X und Senkrechte Y fallen zusammen) und der jeweiligen Kalibrierposition zu verstellen. Falls die Kalibrierflächen 6, 6' auf gleicher Höhe wie die Scheibe 1 angeordnet sind, kann die Verzahnung 37 parallel zur Scheibe 1 sein. In der Ausführungsform in Fig. 15 ist jedoch ähnlich wie in Fig. 14 wegen der höher angeordneten Kalibrierflächen 6, 6' als die Scheibe 1 die Steuerkurve 40 mit der Vertiefung 41, den Anstiegen 42 und den Plateaus 43 für die Tastrolle 44 am Abtastkopf H vorgesehen, um eine ebene Bodenunterseite zu ermöglichen. Die Abtast- und Kalibrierpositionen können bei der Ausführungsform der Fig. 15, wie auch in Fig. 14, beispielsweise mechanisch durch Anschläge an der Steuerkurve und die Vertiefung 41 definiert sein.

Die Erfindung umfasst auch ein Verfahren zum Verwenden des elektronischen Sensorsystems S bei der Futterverarbeitung, und zwar z. B. zum quantitativen Ermitteln und Bestimmen von Futterbestandteilen und zum Überwachen des Mischungsgrades bis zum Abbruch des Mischprozesses. Nachfolgend wird ein nicht beschränkendes Beispiel dieses Verfahrens erläutert.

Vor Betriebsaufnahme des Futtermischers von Fig. 1 und 2 und bei leerem Mischbehälter befindet sich der Abtastkopf H in der Parkposition (Fig. 8) ausgerichtet auf die weiße Kalibrierfläche 6. Vor Mischbeginn führt der Sensor 2 eine Referenzmessung an der weißen Kalibrierfläche 6 durch. Das Messergebnis wird festgehalten. Danach wird der Abtastkopf H verschwenkt in die zweite Kalibrierposition gemäß Fig. 7, ausgerichtet auf die gelbe Kalibrierfläche 6'. Das Messergebnis wird festgehalten. Danach wird der Abtastkopf H in die Abtastposition ausgerichtet auf die Scheibe 1 geschwenkt, und wird ermittelt, ob die Scheibe 1 sauber oder schmutzig ist. Das Messergebnis wird ausgewertet, und wie oben erläutert berücksichtigt.

Ist das Messergebnis eine sauber Scheibe 1, dann wird festgestellt, dass die Kalibrierung in Ordnung war und die Beladung des Mischbehälters beginnen darf. Ist die Scheibe zu schmutzig, wird eine Meldung abgeleitet, dass zuerst eine Säuberung der Scheibe 1 erforderlich ist. Dann wird beispielsweise die Sprühvorrichtung P aktiviert, oder wird mit einem Schlauch im Mischbehälter die Scheibe gesäubert. Die Messung an der gelben Kalibrierfläche 6' ist normalerweise nur ein Mal pro Arbeitszyklus erforderlich, z. B. zur Prüfung der korrekten, nicht verschobenen Position der Lichtwellen-Längsachse.

Zum Kalibrieren wird zunächst die weiße Kalibrierfläche 6 für circa 2 Sekunden gescannt und wird der Ist-Zustand z. B. mittels eines an einer Platine vorgesehenen Spiegels geprüft. Bei positivem Messergebnis wird die weiße Kalibrierfläche 6 für circa 10 Sekunden gescannt, da die Lichtintensität bzw. eine aus dem Reflexionslicht ermittelte elektrische Spannung etwas fluktuieren kann. Aus dieser Messung wird durch eine Berechnung ein aktueller Referenzwert ermittelt und festgehalten. Beim Mischprozess wird ein gemessenes Spektrum mit den Korrekturen aus der Kalibrierung verglichen mit gespeicherten Eichlinien, die vorzugsweise im gleichen Speichermedium gespeichert sind.

Der Ladevorgang umfasst z. B. zunächst Raufutter, z.B. Gras, Mais, Heu oder Stroh. Das Werkzeug M wird oder ist in Gang gesetzt. Das Raufutter wird gemischt. Während des Mischprozesses tastet der Sensor 2 in der Abtastposition getaktet beispielsweise 50 Mal pro Sekunde ab. Daraus wird pro Abtastvorgang ein Spektrum abgeleitet. Die gesammelten Spektren werden ausgewertet und verglichen. Sobald sich die ausgewerteten Spektren oberhalb eines wählbaren Grenzwerts von beispielsweise 98 % nicht mehr ändern, ist dies ein Hinweis auf eine gewünschte Mischgenauigkeit (Mischungsgrad), die als ordnungsgemäß registriert wird. Das letzte ermittelte Spektrum, oder z. B. ein Mittelwert der letzten fünf Spektren wird gespeichert und als Analysespektrum festgehalten. Anschließend kann beispielsweise zur Sicherheit nochmals eine Referenzmessung an der weißen Kalibrierfläche 6 durchgeführt werden. Das Resultat der ersten Referenzmessung an der weißen Kalibrierfläche 6, das ermittelte Analysespektrum, und die zweite Referenzmessung an der weißen Kalibrierfläche 6 werden als Datei beispielsweise über Bluetooth an ein intelligentes Kommunikationsmodul gesendet. Auch die Referenzmessung an der gelben Kalibrierfläche 6' ist dort festgehalten. Dann wird durch Vergleich mit Eichdaten (Eichkennlinien) eine Analyse ausgeführt. Die Analyse kann innerhalb des Sensorsystems S erfolgen. Die Messergebnisse werden nachfolgend mit einem vorbestimmten berechneten Futterwert verglichen, ehe der Mischprozess im Hinblick auf das Erzielen durch einen Benutzer vorbestimmter Futterwerte für die verarbeitete Ration fortgesetzt wird. Dies kann beispielsweise mittels Futteroptimierungs-Software in einer programmierbaren Waage des Futtermischers in Fig. 1 erfolgen. Um diesen Prozess ökonomisch und so präzise wie möglich durchzuführen, wird zunächst so viel kostengünstiges Raufutter wie möglich verarbeitet, und werden erst dann Mengen relativ teurer Zusätze, wie Kraftfutter, Sojamehl usw. auf der Basis eines oder mehrerer selbstgewählter oder vorbestimmter Ausgangsparameter hinzugefügt. Dann wird, wie vom Programm berechnet oder vorgeschlagen, eine letzte kleine Futterkomponenten-Menge geladen und untergemischt, ehe erneut eine Referenzmessung an der weißen Kalibrierfläche 6 durchgeführt wird (die Programmroutine der Überprüfung der schmutzigen Scheibe 1 wird übergangen, da nicht mehr möglich). Dann wird bei der gewünschten Mischgenauigkeit, wie festgehalten, nochmals eine Analyse des Spektrums durchgeführt, nachfolgend erneut eine Kalibrierung an der weißen Kalibrierfläche 6, ehe das Gesamtergebnis als Analyse festgehalten wird. Die Analyse repräsentiert einen Ist-Futterwert. Analysen können entweder im Sensorsystem S vorgenommen werden, das eine leistungsstarke CPU benötigt, wobei Eich-Kennlinien im Sensorsystem S gespeichert sind. Eine Kommunikation mit dem Kommunikationsmodul umfasst z. B. Informationen zur Mischgenauigkeit, das Resultat der Analysen, Befehle, Alarme und Warnungen und Updates zu Eich-Kennlinien und Firmware. Analysen können aber auch in dem Kommunikationsmodul oder z.B. in einer ECU im Mischwagen V der Fig. 1 oder in dessen Wiegecomputer durchgeführt werden. In diesem Fall sind Eich-Kennlinien dort gespeichert und werden die Spektren z. B. über Bluetooth kommuniziert. Es ist auch möglich, Analysen in der Cloud durchzuführen, wo auch Eich-Kennlinien gespeichert sind, wobei die Kommunikation dann über Wifi oder WLAN erfolgt.

Am Beispiel eines Mischprozesses in dem Futtermischer der Fig 1 werden nachstehend die Verarbeitung von Messergebnissen in Verbindung mit der Kalibrierung des Sensorsystems S und einer Kommunikation mit peripheren elektronischen Einrichtungen sowie Anweisungen an einen Operator oder eine automatische Prozesssteuerung erläutert. Dazu wird vor Beginn des Mischprozesses eine Start-up-Prozedur im Sensorsystem S durchgeführt, beispielsweise ein Mal pro Tag die Gültigkeit des Sensorsystem überprüft, und wird ein Messungs-Zyklus durchgeführt, bei dem eine Hintergrundabtastung, eine Überprüfung einer Scheibenverschmutzung, eine Überwachung des Mischprozesses mit Bestimmung des Mischungsgrades und eines zeitlichen Endpunktes des Mischprozesses, eine überprüfende Kalibrierungsmessung, und eine Berechnung eines finalen Spektrums zum Voraussagen der Zusammensetzung der Futtermischung, gegebenenfalls mit Anweisungen zu konkreten Mengen zuzumischender Futter-Bestandteile durchgeführt werden, ehe das Sensorsystem S in eine Parkposition zurückgestellt und abgeschaltet wird.

Bei der Start-up-Prozedur wird zunächst das System initialisiert, ehe die Elektronik überprüft wird. Ehe dann ein Bereit-Status-Signal abgeleitet wird, wird noch die Kalibrierposition des Sensorkopfes, beispielsweise ausgerichtet auf die weiße Kalibrierfläche 6 überprüft oder eingestellt. In der Abtastposition ausgerichtet auf die weiße Kalibierfläche 6 wird die Sensorgültigkeit dadurch festgestellt, dass zunächst eine Korrekturabtastung über circa 2 Sekunden anhand eines vorhandenen Spiegels abläuft. Dies repräsentiert eine Stabilitätsüberprüfung, auf welche bei positivem Ergebnis eine aufgezeichnete Hintergrundabtastung über circa 10 Sekunden vorgenommen wird. Dabei werden Berechnungsakten und Update-Akten aufgezeichnet und wird ein Hintergrundleistungsspektrum errechnet. In der Folge wird der Sensorkopf in die Abtastposition auf die gelbe Kalibrierfläche 6' gestellt und wird eine Standardmusterabtastung beispielsweise über 10 Sekunden aufgezeichnet, um das gelbe Leistungsspektrum zu berechnen, ein gelbes Absorptionsspektrum zu berechnen, eine Bibliotheksfunktion ablaufen zu lassen, und die Gültigkeitsprüfungen zu durchlaufen.

Nachfolgend kann zumindest einmal der Sensorkopf in die Abtastposition ausgerichtet auf die Scheibe gebracht werden, um die Verschmutzung zu überprüfen, bei Detektion einer Verschmutzung ein Warnsignal abzugeben oder eine Reinigung zu veranlassen, oder bei sauberer Scheibe ein Bereit-Signal zu generieren, ehe nachfolgend der Sensorkopf wieder in die Abtastposition ausgerichtet auf die weiße Kalibierfläche 6 gestellt wird.

Zum Überwachen des Mischprozesses und zum Bestimmen des Mischungsgrades und damit des zeitlichen Schlusspunkts des Mischprozesses wird der Sensorkopf H in die Abtastposition ausgerichtet auf die Scheibe 1 gestellt. Dann wird über beispielsweise 2 Sekunden kontinuierlich eine Musterabtastung ausgeführt. Die Scheibe 1 kann z. B. 50 Mal pro Minute oder pro Sekunde abgetastet werden. Aus beispielsweise fünf letzten Abtastungen nach Erreichen einer Mischgenauigkeits-Schwelle von z. B. 98% wird ein durchschnittliches Musterspektrum berechnet, und wird unter Nutzen des berechneten Hintergrundleistungsspektrums und einer erneuten Abtastung der weißen Kalibrierfläche 6 das Absorptionsspektrum berechnet. Der Mischungsstatus wird unter Auswerten der Messergebnisse bestimmt und an eine User-Schnittstelle gesendet. Dies wird wiederholt, bis die vorbestimmte Schwelle erreicht ist, an der sich der Mischungsstatus nicht mehr nennenswert ändert (Erreichen der gewünschten Mischgenauigkeit). Dann wird die Abtastung beendet.

Wie erwähnt wird der Sensorkopf H wieder in die Abtastposition ausgerichtet auf die weiße Abtastfläche 6 gestellt, und wird eine kontinuierliche Abtastung über 10 Sekunden durchgeführt, aus der ein Musterspektrum berechnet wird, das den Durchschnitt der letzten fünf Musterabtastungen und die Abtastung der weißen Kalibrierfläche benutzt, um schließlich das Absorptionsspektrum zu berechnen. Dann wird eine Analyse durchgeführt, indem das Absorptionsspektrum verglichen wird mit vorbestimmten Voraussage-Gleichungen.

Zum Berechnen des finalen Spektrums und zur Voraussage der Zusammensetzung der Futtermischung wird diese berechnet unter Verwendung des errechneten Absorptionsspektrums und vorbestimmter Voraussage-Gleichungen. Das Resultat sind Prozentangaben oder Mengenangaben zu beispielsweise trockenen Anteilen, Proteinen, Fasern oder Zellstoff, Fett, Asche, Zucker oder Stärke. Diese Ergebnisse werden an die User-Schnittstelle übertragen, beispielsweise für den Operator oder die automatische Prozesssteuerung. Auf diese Weise ist der Operator oder die automatische Prozesssteuerung informiert, ob noch Futterbestandteile und in welchen Mengen nachzuladen sind oder nicht, dass und wie die vorbestimmte Zusammensetzung der Futtermischung erreicht wird, und wann der Mischprozess abgebrochen werden kann, weil die gewünschte Mischgenauigkeit erreicht ist. Dies kann in einem Zyklus ausgeführt werden, oder falls noch Korrekturen erforderlich sind, mittels mehrere dieser Zyklen.

Die Mischgenauigkeit kann kontinuierlich überwacht werden. Um die begrenzte Lebensdauer (z. B. 10.000 Stunden) der Lichtquellen besser zu nutzen, könnte am Anfang der Mischprozess mit Zwischenintervallen überwacht werden, die immer kürzer werden, je näher die gesetzte Mischgenauigkeits-Schwelle kommt.

## Patentansprüche

1. Vorrichtung (V) zum Bearbeiten von Erntegut, Tierfutter oder -komponenten, insbesondere Futtermischer, mit einem antreibbaren Werkzeug (M) und wenigstens einem NIR-Sensorsystem (S) zum Ermitteln von Futterwerten und/oder einer Mischgenauigkeit, das in einem Gehäuse (5) des NIR-Sensorsystems (S) hinter einer vom Futter passierbaren, lichtdurchlässigen Scheibe (1) einen NIR-Abtastkopf (H) mit zumindest einem NIR-Sensor (2) und wenigstens eine Lichtquelle (4) aufweist, **dadurch gekennzeichnet, dass** der NIR-Abtastkopf (H) zur Kalibrierung in dem die Scheibe (1) enthaltenden Gehäuse (5) aktiv zwischen einer auf die Scheibe (1) ausgerichteten Abtastposition und mindestens einer auf eine im Gehäuse (5) angeordneten Kalibrierfläche (6, 6') ausgerichteten Kalibrierposition verstellbar ist, wobei deren Erscheinungsbild verschieden ist vom Erscheinungsbild des Ernteguts oder Futters an der Scheibe (1), und dass der NIR-Abtastkopf (H) in dem Gehäuse (5) mittels eines im Gehäuse (5) angeordneten Antriebs (16, 17) zwischen den vorbestimmten Abtast- und Kalibrierpositionen schwenkbar, umfänglich drehbar, taumelnd drehbar, oder linear verschiebbar ist.

2. Vorrichtung nach Anspruch 1, **dadurch gekennzeichnet, dass** zwei separierte Kalibrierflächen (6, 6') mit untereinander verschiedenen Erscheinungsbildern stationär im Gehäuse (5) vorgesehen sind, insbesondere mit einer weißen und einer gelben Einfärbung.

3. Vorrichtung nach wenigstens einem der vorhergehenden Ansprüche, **dadurch gekennzeichnet, dass** in jeder Kalibrierposition der Abstand (X) und der Ausrichtwinkel (α) des NIR-Sensors (2) und der Lichtquelle (4) von der und zur Kalibrierfläche (6, 6') dem Abstand (x) und Ausrichtwinkel (α), vorzugsweise exakt 90°, von der und zur Scheibe (1) in der Abtastposition zumindest weitestgehend entsprechen.

4. Vorrichtung nach wenigstens einem der vorhergehenden Ansprüche, **dadurch gekennzeichnet, dass** der NIR-Abtastkopf (H) in dem Gehäuse (5) mittels des Antriebs (16, 17) zwischen den Abtast- und Kalibrierpositionen, einschließlich einer Parkposition, verstellbar ist, und beim linearen Verschieben heb- und/oder absenkbar ist.

5. Vorrichtung nach Anspruch 1, **dadurch gekennzeichnet, dass** der NIR-Abtastkopf (H) um eine im Gehäuse (5) festgelegte, zur Scheibe (1) im Wesentlichen parallele Achse (22) hin- und herschwenkbar ist.

6. Vorrichtung nach wenigstens einem der vorhergehenden Ansprüche, **dadurch gekennzeichnet, dass** die Abtast-, Park- und Kalibrierpositionen des NIR-Abtastkopfes (H) durch mechanische Anschläge (19, 32, 41) oder elektrisch definiert sind.

7. Vorrichtung nach Anspruch 1, **dadurch gekennzeichnet, dass** der NIR-Abtastkopf (H) entlang wenigstens einer Führungsschiene (14), vorzugsweise zweier paralleler Führungsschienen (14), linear und im Wesentlichen parallel zur Scheibe (1) geführt verschiebbar ist, wobei, vorzugsweise, zumindest eine Führungsschiene (14) ein Zahnstangenprofil (15) für einen am NIR-Abtastkopf (H) verbauten Zahnradantrieb (16, 17) aufweist.

8. Vorrichtung nach Anspruch 4, **dadurch gekennzeichnet, dass** der NIR-Abtastkopf (H) entlang wenigstens einer Führungsschiene (14), vorzugsweise zweier paralleler Führungsschienen (14), geführt verschiebbar ist, die lineare Abschnitte (30) parallel zur Scheibe (1) und Anhebe- und Absenkabschnitte (31) sowie ein Zahnstangenprofil (15) für einen am NIR-Abtastkopf (H) verbauten Zahnradantrieb (16, 17) aufweist.

9. Vorrichtung nach Anspruch 1, **dadurch gekennzeichnet, dass** der NIR-Abtastkopf (H) in einer stationären Drehlagerung (35) aktiv taumelnd drehbar ist, deren Drehachse (Z) gegenüber einer zur Scheibe (1) Senkrechten (Y) schräg verläuft, dass die vom NIR-Sensor (2) definierte optische Achse (X) des NIR-Abtastkopfes (H) gegenüber der Drehachse (Z) der Drehlagerung (35) schräg geneigt ist, derart, dass bei der Drehung des NIR-Abtastkopfes (H) um die Drehachse (Z) die optische Achse (X) des NIR-Abtastkopfes (H) in einer vorbestimmten Abtastposition zum Zentrum der Scheibe (1) senkrecht steht, und dass die Kalibrierflächen (6, 6') relativ zur Scheibe (1) schräg gestellt sind und, vorzugsweise, im Wesentlichen auf eine Kreuzung der Drehachse (Z) mit der optischen Achse (X) ausgerichtet sind.

10. Vorrichtung nach Anspruch 1, **dadurch gekennzeichnet, dass** der NIR-Abtastkopf (H) in einer zu einer Senkrechten (Y) auf das Zentrum der Scheibe (1) parallele Drehachse (Z) einer Drehlagerung (35) aktiv drehbar ist, die seitlich gegenüber der Scheibe (1) versetzt ist, und dass jede Kalibrierfläche (6, 6') und die Scheibe (1) in etwa in gleichem Radialabstand von der Drehlagerung (5) platziert sind.

11. Vorrichtung nach Anspruch 1, **dadurch gekennzeichnet, dass** der NIR-Abtastkopf (H) in einer gegenüber dem Zentrum der Scheibe (1) exzentrischen Drehlagerung (35) mit einer zu einer Senkrechten (Y) auf das Zentrum der Scheibe (1) parallelen Drehachse (Z) aktiv drehbar ist und in der Drehlagerung (35) exzentrisch gegenüber der Drehachse (Z) platziert ist, und dass die Scheibe (1) und jede dazu parallele Kalibrierfläche (6, 6') in etwa im gleichen Radialabstand von der Drehachse (Z) angeordnet sind.

12. Vorrichtung nach Anspruch 10 oder 11, **dadurch gekennzeichnet, dass** der NIR-Abtastkopf (H) in der Drehlagerung (35) in Richtung der Senkrechten (Y) auf- und abverschiebbar geführt ist, dass eine stationäre Steuerkurve (40) für eine Tastrolle (44) des NIR-Abtastkopfes (H) vorgesehen ist, dass die Steuerkurve (40) ausgehend von einer die Abtastposition definierenden Vertiefung (41) wenigstens einen Anstieg (42) zu einem die Kalibrierposition definierenden Plateau (43) aufweist, und dass jede Kalibrierfläche (6, 6') parallel zur Scheibe (1) auf höherem Niveau als diese platziert ist.

13. Vorrichtung nach wenigstens einem der vorhergehenden Ansprüche, **dadurch gekennzeichnet, dass** die Kalibrierfläche (6, 6') an der Außenseite einer lichtdurchlässigen Scheibe (20) platziert ist, die der Scheibe (1), insbesondere in ihren optischen Eigenschaften, der Form und den Abmessungen zumindest weitestgehend gleich ist.

14. Vorrichtung nach wenigstens einem der vorhergehenden Ansprüche, **dadurch gekennzeichnet, dass** das Gehäuse (5) mit einem im Grundzug runden, viereckigen oder ovalen Domoberteil (10) und einem an der Unterseite zumindest weitestgehend ebenen Boden (11) ausgebildet ist, dass die Scheibe (1) in einem zum Scheibentausch von außen lösbar, vorzugsweise bündig mit der Bodenunterseite, im Boden (11) montierten Rahmen (35) sitzt, und dass die Scheibe (1) eine von einem Kreiszylinder abweichende Form, vorzugsweise mit einem Versatz und/oder einer Anschrägung, hat und formschlüssig festgelegt ist.

15. Vorrichtung nach wenigstens einer der vorhergehenden Ansprüche, **dadurch gekennzeichnet, dass** die Scheibe (1) aus äußeren und inneren Scheiben gebildet ist, die separat im Boden (11) festgelegt sind.

16. Vorrichtung nach wenigstens einem der vorhergehenden Ansprüche, **dadurch gekennzeichnet, dass** zwischen der Scheibe (1) und der Kalibrierfläche (6, 6') eine Trennwand (21) vorgesehen ist, vorzugsweise ein schwarzer Gummi- oder Kunststoffrahmen als Einfassung der Scheibe (1) und/oder der Kalibrierfläche (6, 6') und/oder des Abtastkopfes (H).

17. Vorrichtung nach wenigstens einem der vorhergehenden Ansprüche, **dadurch gekennzeichnet, dass** das Gehäuse (5) des NIR-Sensorsystems (S) an oder in dem Erntegut, Futter oder -komponenten bearbeitenden, antreibbaren Werkzeug (M) mitbewegbar angeordnet ist, vorzugsweise in oder an einer Mischschnecke eines Futtermischers.

18. Vorrichtung nach wenigstens einem der vorhergehenden Ansprüche, **dadurch gekennzeichnet, dass** das NIR-Sensorsystem (S) eine Heizvorrichtung und/oder eine Kühlvorrichtung (T) aufweist.

19. Vorrichtung nach wenigstens einem der vorhergehenden Ansprüche, **dadurch gekennzeichnet, dass** für die Außenseite der Scheibe (1) eine an das Gehäuse (5) angeschlossene Sprühvorrichtung mit einem Speicherbehälter (28), einer Pumpe (29) und wenigstens einer am Boden (11) montierten Sprühdüse (24) vorgesehen ist.

20. Vorrichtung nach wenigstens einem der vorhergehenden Ansprüche, **dadurch gekennzeichnet, dass** eine elektronische Steuerung (CPU) des NIR-Sensorsystems (S) zusätzlich unter Nutzen der Kalibrierfläche (6, 6') zum Ermitteln eines Verschmutzungsgrades der Außenseite der Scheibe (1) und/oder zum Aktivieren einer Sprühvorrichtung ausgebildet ist.

21. Elektronisches NIR-Sensorsystem (S) zum Ermitteln von Futterwerten und/oder eines Mischungsgrads in Erntegut, Tierfutter oder -komponenten bearbeitenden Vorrichtungen (V), mit einem einen NIR-Sensor (2), wenigstens eine Lichtquelle (4) in einem NIR-Abtastkopf (H) und eine lichtdurchlässige Scheibe (1) enthaltenden Gehäuse (5), **dadurch gekennzeichnet, dass** der NIR-Abtastkopf (H) in dem Gehäuse (5) in einer Futter-Abtastposition auf die Scheibe (1) ausgerichtet ist, dass im Gehäuse (5) zur Kalibrierung des NIR-Sensorsystems (S) gegenüber der Scheibe (1) versetzt wenigstens eine im Wesentlichen stationäre Kalibrierfläche (6, 6') vorgesehen ist, und dass der NIR-Abtastkopf (H) zur Kalibrierung des NIR-Sensorsystems (S) zwischen der Abtastposition und einer auf eine jeweilige Kalibrierfläche (6, 6') ausgerichteten Kalibrierposition im Gehäuse (5) aktiv mittels eines im Gehäuse (5) angeordneten Antriebs (16, 17) zwischen den Abtast- und Kalibrierpositionen schwenkbar, umfänglich drehbar, taumelnd drehbar oder linear verschiebbar verstellbar ist, wobei das Erscheinungsbild jeder Kalibrierfläche (6, 6') verschieden ist vom Erscheinungsbild des Ernteguts oder Futters an der Scheibe (1).

22. Verfahren zum Kalibrieren eines zur Ermittlung von Futterwerten und/oder eines Mischungsgrades in einer Futtermischung eingesetzten NIR-Sensorsystems (S), das in einem Gehäuse (5) eine lichtdurchlässige, von der Futtermischung überstrichene Scheibe (1), einen NIR-Sensorkopf (H) mit einem NIR-Sensor (2) für reflektierte Spektren und eine Lichtquelle (4) sowie wenigstens eine Kalibrierfläche (6, 6') aufweist, und zwischen einer Scheiben-Abtastposition und einer Kalibrierposition umstellbar ist, **dadurch gekennzeichnet, dass** der NIR-Sensorkopf (H) mit seinem NIR-Sensor (5) im Gehäuse (5) relativ zu der Scheibe (1) durch einen Bewegungsantrieb (13) im Gehäuse (5) aktiv zwischen den Abtast- und Kalibrierpositionen hin- und herverstellt wird, und dass der jeweiligen Kalibrierfläche (6, 6') ein vom Erscheinungsbild der Futtermischung an der Scheibe (1) verschiedenes Erscheinungsbild gegeben wird.

23. Verfahren nach Anspruch 22, **dadurch gekennzeichnet, dass** der NIR-Sensorkopf (H) wahlweise in mehr als eine Kalibrierposition zu einer ersten im Gehäuse (5) stationären Kalibrierfläche (6) und mindestens einer zweiten, stationären Kalibrierfläche (6') mit untereinander verschiedenen, gegenüber dem Erscheinungsbild der Futtermischung an der Scheibe (1) unterschiedlichen Erscheinungsbildern verstellt wird.

24. Verfahren nach Anspruch 22, **dadurch gekennzeichnet, dass** in der Kalibrierposition die Kalibrierfläche (6, 6') zwischen etwa 2 bis 10 Sekunden kontinuierlich, hingegen in der Abtastposition die Scheibe (1) regelmäßig getaktet gescannt werden, und dass zumindest nach der Ermittlung der Futterwerte und/oder der Mischgenauigkeit sicherheitshalber eine weitere Messung durchgeführt wird.

## Claims

1. Apparatus (V) for processing crop, animal feed or components, in particular feed mixer, comprising a drivable tool (M) and at least one NIR sensor system (S) for determining feed values and/or a mixing accuracy, which comprises a NIR scanning head (H) with at least one NIR sensor (2) and at least one light source (4) in a housing (5) of the NIR sensor system (S) behind a transparent pane (1) which can be passed by the feed, **characterized in that** the NIR scanning head (H) is actively adjustable for calibration in the housing (5) containing the pane (1), between a scanning position aligned with the pane (1) and at least one calibration position aligned with a calibration surface (6, 6') arranged in the housing (5), the appearance of which is different from the appearance of the crop or feed on the pane (1), and that the NIR scanning head (H) in the housing (5) is pivotable, circumferentially rotatable, wobblingly rotatable, or linearly displaceable between the predetermined scanning and calibration positions by means of a drive (16, 17) arranged in the housing (5).

2. Apparatus according to claim 1, **characterized in that** two separated calibration surfaces (6, 6') with mutually different appearances are provided stationary in the housing (5), in particular with a white and a yellow coloring.

3. Apparatus according to at least one of the preceding claims, **characterized in that** in each calibration position the distance (X) and the alignment angle (α) of the NIR sensor (2) and the light source (4) from and to the calibration surface (6, 6') correspond at least substantially to the distance (x) and the alignment angle (α), preferably exactly 90°, from and to the pane (1) in the scanning position.

4. Apparatus according to at least one of the preceding claims, **characterized in that** the NIR scanning head (H) in the housing (5) is adjustable by means of the drive (16, 17) between the scanning and calibration positions, including a parking position, and is liftable and/or lowerable during the linear displacement.

5. Apparatus according to claim 1, **characterized in that** the NIR scanning head (H) can be pivoted back and forth about an axis (22) which is fixed in the housing (5) and substantially parallel to the pane (1).

6. Apparatus according to at least one of the preceding claims, **characterized in that** the scanning, parking and calibration positions of the NIR scanning head (H) are defined by mechanical stops (19, 32, 41) or electrically.

7. Apparatus according to claim 1, **characterized in that** the NIR scanning head (H) is displaceable linearly and guided substantially parallel to the pane (1) along at least one guide rail (14), preferably two parallel guide rails (14), wherein, preferably, at least one guide rail (14) comprises a rack and pinion profile (15) for a gear drive (16, 17) installed on the NIR scanning head (H).

8. Apparatus according to claim 4, **characterized in that** the NIR scanning head (H) is displaceable guided along at least one guide rail (14), preferably two parallel guide rails (14), which comprises linear sections (30) parallel to the pane (1) and lifting and lowering sections (31) as well as a rack and pinion profile (15) for a gear drive (16, 17) installed on the NIR scanning head (H).

9. Apparatus according to claim 1, **characterized in that** the NIR scanning head (H) is actively wobblingly rotatable in a stationary rotary bearing (35), the axis of rotation (Z) of which extends obliquely with respect to a vertical (Y) to the pane (1), that the optical axis (X) of the NIR scanning head (H) defined by the NIR sensor (2) is obliquely inclined with respect to the axis of rotation (Z) of the rotary bearing (35), such that upon rotation of the NIR scanning head (H) about the axis of rotation (Z), the optical axis (X) of the NIR scanning head (H) stands perpendicular to the center of the pane (1) in a predetermined scanning position, and that the calibration surfaces (6, 6') are inclined relative to the pane (1) and, preferably, substantially aligned with an intersection of the axis of rotation (Z) with the optical axis (X).

10. Apparatus according to claim 1, **characterized in that** the NIR scanning head (H) is actively rotatable in an axis of rotation (Z), which is parallel to a vertical (Y) to the center of the pane (1), of a rotary bearing (35) which is laterally offset with respect to the pane (1), and that each calibration surface (6, 6') and the pane (1) are placed approximately at the same radial distance from the rotary bearing (5).

11. Apparatus according to claim 1, **characterized in that** the NIR scanning head (H) is actively rotatable in a rotary bearing (35) eccentric with respect to the center of the pane (1) with an axis of rotation (Z) parallel to a vertical (Y) to the center of the pane (1) and is placed in the rotary bearing (35) eccentrically with respect to the axis of rotation (Z), and that the pane (1) and each calibration surface (6, 6') parallel thereto are arranged approximately at the same radial distance from the axis of rotation (Z).

12. Apparatus according to claim 10 or 11, **characterized in that** the NIR scanning head (H) is guided in the rotary bearing (35) so as to be displaceable up and down in the direction of the vertical (Y), that a stationary control cam (40) is provided for a scanning roller (44) of the NIR scanning head (H), that the control cam (40), starting from a recess (41) defining the scanning position, has at least one ascent (42) to a plateau (43) defining the calibration position, and that each calibration surface (6, 6') is placed parallel to the pane (1) at a higher level than the latter.

13. Apparatus according to at least one of the preceding claims, **characterized in that** the calibration surface (6, 6') is placed on the outside of a transparent pane (20) which is at least substantially identical to the pane (1), in particular in its optical properties, the shape and the dimensions.

14. Apparatus according to at least one of the preceding claims, **characterized in that** the housing (5) is formed with a basically round, quadrangular or oval dome top (10) and a bottom (11) which is at least substantially flat on the underside, that the pane (1) is seated in a frame (35) mounted in the bottom (11) so as to be detachable from the outside for pane replacement, preferably flush with the underside of the bottom, and that the pane (1) has a shape which deviates from a circular cylinder, preferably with an offset and/or a bevel, and is fixed in a form-fitting manner.

15. Apparatus according to at least one of the preceding claims, **characterized in that** the pane (1) is formed of outer and inner panes which are separately fixed in the bottom (11).

16. Apparatus according to at least one of the preceding claims, **characterized in that** a partition wall (21) is provided between the pane (1) and the calibration surface (6, 6'), preferably a black rubber or plastic frame as an enclosure for the pane (1) and/or the calibration surface (6, 6') and/or the scanning head (H).

17. Apparatus according to at least one of the preceding claims, **characterized in that** the housing (5) of the NIR sensor system (S) is co-movably arranged on or in the drivable tool (M), which is processing crop, feed or feed components, preferably in or on a mixing auger of a feed mixer.

18. Apparatus according to at least one of the preceding claims, **characterized in that** the NIR sensor system (S) comprises a heating device and/or a cooling device (T).

19. Apparatus according to at least one of the preceding claims, **characterized in that** a spray device connected to the housing (5) and comprising a storage container (28), a pump (29) and at least one spray nozzle (24) mounted on the bottom (11) is provided for the outside of the pane (1).

20. Apparatus according to at least one of the preceding claims, **characterized in that** an electronic control (CPU) of the NIR sensor system (S) is additionally designed using the calibration surface (6, 6') for determining a soiling degree of the outside of the pane (1) and/or for activating a spray device.

21. Electronic NIR sensor system (S) for determining feed values and/or a degree of mixing in apparatuses (V) processing crop, animal feed or components, comprising a housing (5) containing an NIR sensor (2), at least one light source (4) in a NIR scanning head (H) and a transparent pane (1), **characterized in that** the NIR scanning head (H) in the housing (5) is aligned with the pane (1) in a feed scanning position, that at least one substantially stationary calibration surface (6, 6') is provided in the housing (5) for calibrating the NIR sensor system (S), offset with respect to the pane (1), and that the NIR scanning head (H) for calibrating the NIR sensor system (S) between the scanning position and a calibration position aligned with a respective calibration surface (6, 6') is arranged in the housing (5) actively adjustable between the scanning and calibration positions by means of a drive (16, 17) arranged in the housing (5) by being pivotable, circumferentially rotatable, wobblingly rotatable, or linearly displaceable, wherein the appearance of each calibration surface (6, 6') is different from the appearance of the crop or feed on the pane (1).

22. Method for calibrating an NIR sensor system (S) used to determine feed values and/or a degree of mixing in a feed mixture, which NIR sensor system comprises, in a housing (5), a transparent pane (1) swept over by the feed mixture, a NIR sensor head (H) with an NIR sensor (2) for reflected spectra and a light source (4) and at least one calibration surface (6, 6') and can be switched between a pane scanning position and a calibration position, **characterized in that** the NIR sensor head (H) with its NIR sensor (5) in the housing (5) is actively moved back and forth relative to the pane (1) by a movement drive (13) in the housing (5) between the scanning and calibration positions , and that the respective calibration surface (6, 6') is given an appearance which differs from the appearance of the feed mixture on the pane (1).

23. Method according to claim 22, **characterized in that** the NIR sensor head (H) is selectively adjusted in more than one calibration position relative to a first stationary calibration surface (6) in the housing (5) and at least one second stationary calibration surface (6') with mutually differing appearances differing from the appearance of the feed mixture on the pane (1).

24. Method according to claim 22, **characterized in that** in the calibration position the calibration surface (6, 6') is scanned continuously between approximately 2 to 10 seconds, whereas in the scanning position the pane (1) is scanned regularly clocked, and that at least after the determination of the feed values and/or the mixing accuracy a further measurement is carried out for safety's sake.

## Revendications

1. Dispositif (V) permettant de traiter des produits de récolte, du fourrage ou des composants de nourriture pour animaux, en particulier mélangeur de fourrage, comprenant un outil (M) pouvant être entraîné et au moins un système de capteur proche infrarouge PIR (S) permettant de déterminer des valeurs de fourrages et/ou une précision de mélange, qui présente, au sein d'un boîtier (5) du système de capteur PIR (S) et derrière une vitre (1) transparente devant laquelle peut passer le fourrage, une tête de balayage PIR (H) avec au moins un capteur PIR (2) et au moins une source de lumière (4), **caractérisé en ce que,** en vue d'un étalonnage au sein du boîtier (5) contenant la vitre (1), la tête de balayage PIR (H) peut être ajustée de manière active entre une position de balayage alignée sur la vitre (1) et au moins une position d'étalonnage alignée sur une surface d'étalonnage (6, 6') agencée dans le boîtier (5), l'aspect de celle-ci étant différent de l'aspect du produit de récolte ou du fourrage au niveau de la vitre (1), et **en ce que** la tête de balayage PIR (H) peut être pivotée, tournée complètement, tournée de manière échelonnée, ou déplacée de manière linéaire au sein du boîtier (5) entre les positions de balayage et d'étalonnage prédéterminées, au moyen d'un entraînement (16, 17) agencé dans le boîtier (5).

2. Dispositif selon la revendication 1, **caractérisé en ce que** deux surfaces d'étalonnage (6, 6') séparées présentant des aspects différents les uns des autres, en particulier présentant une coloration blanche et une coloration jaune, sont fournies de manière stationnaire dans le boîtier (5).

3. Dispositif selon au moins l'une quelconque des revendications précédentes, **caractérisé en ce que,** dans chaque position d'étalonnage, la distance (X) et l'angle d'alignement (α) du capteur PIR (2) et de la source de lumière (4) à partir de et vers la surface d'étalonnage (6, 6') correspondent au moins dans une large mesure à la distance (x) et à l'angle d'alignement (α), de manière préférée exactement 90°, à partir de et vers la vitre (1) dans la position de balayage.

4. Dispositif selon au moins l'une quelconque des revendications précédentes, **caractérisé en ce que** la tête de balayage PIR (H) peut être ajustée au sein du boîtier (5) au moyen de l'entraînement (16, 17) entre les positions de balayage et d'étalonnage, y compris une position de stationnement, et peut être soulevée et/ou abaissée lors du déplacement linéaire.

5. Dispositif selon la revendication 1, **caractérisé en ce que** la tête de balayage PIR (H) peut pivoter en va-et-vient autour d'un axe (22) fixé dans le boîtier (5) et essentiellement parallèle à la vitre (1).

6. Dispositif selon au moins l'une quelconque des revendications précédentes, **caractérisé en ce que** les positions de balayage, de stationnement et d'étalonnage de la tête de balayage PIR (H) sont définies de manière électrique ou grâce à des butées mécaniques (19, 32, 41).

7. Dispositif selon la revendication 1, **caractérisé en ce que** la tête de balayage PIR (H) peut être déplacée le long d'au moins un rail de guidage (14), de manière préférée de deux rails de guidage (14) parallèles, en étant guidée de manière linéaire et essentiellement parallèle à la vitre (1), dans lequel au moins un rail de guidage (14) présente de manière préférée un profil de crémaillère (15) pour un entraînement à roue dentée (16, 17) monté sur la tête de balayage PIR (H).

8. Dispositif selon la revendication 4, **caractérisé en ce que** la tête de détection PIR (H) peut être déplacée de manière guidée le long d'au moins un rail de guidage (14), de manière préférée de deux rails de guidage parallèles (14), présentant des sections linéaires (30) parallèles à la vitre (1) et des sections de levage et d'abaissement (31) ainsi qu'un profil de crémaillère (15) pour un entraînement à roue dentée (16, 17) monté sur la tête de détection PIR (H).

9. Dispositif selon la revendication 1, **caractérisé en ce que** la tête de balayage PIR (H) peut tourner partiellement de manière active dans un palier rotatif fixe (35) dont l'axe de rotation (Z) s'étend en oblique par rapport à une perpendiculaire (Y) à la vitre (1), **en ce que** l'axe optique (X) de la tête de balayage PIR (H) défini par le capteur PIR (2) est incliné en oblique par rapport à l'axe de rotation (Z) du palier rotatif (35) de telle manière que, lors de la rotation de la tête de balayage PIR (H) autour de l'axe de rotation (Z), l'axe optique (X) de la tête de balayage PIR (H) est perpendiculaire par rapport au centre de la vitre (1) dans une position de balayage prédéterminée, et **en ce que** les surfaces d'étalonnage (6, 6') sont inclinées par rapport à la vitre (1) et, de manière préférée, sont essentiellement alignées sur un croisement de l'axe de rotation (Z) avec l'axe optique (X).

10. Dispositif selon la revendication 1, **caractérisé en ce que** la tête de détection PIR (H) peut tourner de manière active selon un axe de rotation (Z), parallèle à une perpendiculaire (Y) au centre de la vitre (1), d'un palier de rotation (35) qui est décalé latéralement par rapport à la vitre (1), et **en ce que** chaque surface d'étalonnage (6, 6') et la vitre (1) sont placées à peu près à la même distance radiale du palier de rotation (5).

11. Dispositif selon la revendication 1, **caractérisé en ce que** la tête de balayage PIR (H) peut tourner de manière active dans un palier de rotation (35) excentré par rapport au centre de la vitre (1) avec un axe de rotation (Z) parallèle par rapport à une perpendiculaire (Y) au centre de la vitre (1) et est placée de manière excentrée par rapport à l'axe de rotation (Z) dans le palier de rotation (35), et **en ce que** la vitre (1) et chaque surface d'étalonnage (6, 6') parallèle à celle-ci sont agencées à peu près à la même distance radiale de l'axe de rotation (Z).

12. Dispositif selon la revendication 10 ou 11, **caractérisé en ce que** la tête de balayage PIR (H) est guidée de manière à pouvoir être déplacée vers le haut et vers le bas dans le palier rotatif (35) en direction de la perpendiculaire (Y), **en ce qu'**une came de commande fixe (40) est fournie pour un rouleau de palpage (44) de la tête de balayage PIR (H), **en ce que** la came de commande (40) présente au moins une montée (42) vers un plateau (43) définissant la position d'étalonnage à partir d'un renfoncement (41) définissant la position de balayage, et **en ce que** chaque surface d'étalonnage (6, 6') est placée parallèlement à la vitre (1) à un niveau supérieur à celui-ci.

13. Dispositif selon au moins l'une quelconque des revendications précédentes, **caractérisé en ce que** la surface d'étalonnage (6, 6') est placée sur la face extérieure d'une vitre transparente (20) dont en particulier les propriétés optiques, la forme et les dimensions sont au moins dans une large mesure identiques à celles de la vitre (1).

14. Dispositif selon au moins l'une quelconque des revendications précédentes, **caractérisé en ce que** le boîtier (5) est conçu avec une partie supérieure de dôme (10) essentiellement ronde, carrée ou ovale et un fond (11) dont la face inférieure est plane au moins dans une large mesure, **en ce que** la vitre (1) est logée dans un cadre (35) monté dans le fond (11) de manière amovible de l'extérieur en vue du remplacement de la vitre, de manière préférée en affleurement avec la face inférieure de fond, et **en ce que** la vitre (1) a une forme différente d'un cylindre circulaire, de manière préférée avec un décalage et/ou une inclinaison, et est fixée par complémentarité de forme.

15. Dispositif selon au moins l'une quelconque des revendications précédentes, **caractérisé en ce que** la vitre (1) est constituée de vitres extérieure et intérieure qui sont fixées dans le fond (11) de manière séparée.

16. Dispositif selon au moins l'une quelconque des revendications précédentes, **caractérisé en ce qu'**une paroi de séparation (21) est fournie entre la vitre (1) et la surface d'étalonnage (6, 6'), de manière préférée un cadre en caoutchouc ou plastique noir servant de bordure à la vitre (1) et/ou à la surface d'étalonnage (6, 6') et/ou à la tête de balayage (H).

17. Dispositif selon au moins l'une quelconque des revendications précédentes, **caractérisé en ce que** le boîtier (5) du système de capteur PIR (S) est agencé de manière à pouvoir être déplacé de manière concomitante sur ou dans l'outil (M) pouvant être entraîné et traitant le produit de récolte, le fourrage ou les composants, de manière préférée dans ou sur une vis sans fin de mélange d'un mélangeur de fourrage.

18. Dispositif selon au moins l'une quelconque des revendications précédentes, **caractérisé en ce que** le système de capteur PIR (S) présente un dispositif de chauffage et/ou un dispositif de refroidissement (T).

19. Dispositif selon au moins l'une quelconque des revendications précédentes, **caractérisé en ce qu'**un dispositif de pulvérisation raccordé au boîtier (5) et muni d'un réservoir de stockage (28), d'une pompe (29) et d'au moins une buse de pulvérisation (24) montée sur le fond (11) est fourni sur la face extérieure de la vitre.

20. Dispositif selon au moins l'une quelconque des revendications précédentes, **caractérisé en ce qu'**une commande électronique (CPU) du système de capteur PIR (S) est en outre réalisée en utilisant la surface d'étalonnage (6, 6') afin de déterminer un degré d'encrassement de la face extérieure de la vitre (1) et/ou afin d'activer un dispositif de pulvérisation.

21. Système de capteur PIR électronique (S) permettant de déterminer des valeurs de fourrage et/ou un degré de mélange dans des dispositifs (V) d'usinage de produits de récolte, de fourrage ou de composants de nourriture pour animaux, comprenant un boîtier (5) contenant un capteur PIR (2), au moins une source de lumière (4) dans une tête de balayage PIR (H) et une vitre (1) transparente à la lumière, **caractérisé en ce que** la tête de balayage PIR (H) est alignée sur la vitre (1) au sein du boîtier (5) dans une position de balayage de fourrage, **en ce qu'**au moins une surface d'étalonnage (6, 6') essentiellement fixe et décalée par rapport à la vitre (1) est fournie au sein du boîtier (5) en vue de l'étalonnage du système de capteur PIR (S), et **en ce que** la tête de balayage PIR (H) peut être pivotée, tournée totalement, tournée partiellement, ou déplacée de manière linéaire de manière active au sein du boîtier (5), au moyen d'un entraînement (16, 17) agencé dans le boîtier (5), entre la position de balayage et une position d'étalonnage alignée sur une surface d'étalonnage (6, 6') respective en vue de l'étalonnage du système de capteur PIR (S), dans lequel l'aspect de chaque surface d'étalonnage (6, 6') respective est différent de l'aspect de la surface du produit de récolte ou du fourrage au niveau de la vitre (1).

22. Procédé d'étalonnage d'un système de capteur PIR (S) utilisé pour déterminer des valeurs de fourrage et/ou un degré de mélange dans un mélange de fourrage, lequel système de capteur présente, au sein d'un boîtier (5), une vitre (1) transparente parcourue par le mélange de fourrage, une tête de capteur PIR (H) avec un capteur PIR (2) dédié aux spectres réfléchis et une source de lumière (4) ainsi qu'au moins une surface d'étalonnage (6, 6'), et peut être commuté entre une position de balayage de vitre et une position d'étalonnage, **caractérisé en ce que** la tête de capteur PIR (H) avec son capteur PIR (5) est déplacée en va-et-vient de manière active dans le boîtier (5) par rapport à la vitre (1) entre les positions de balayage et d'étalonnage grâce à un entraînement de déplacement (13), et **en ce que** la surface d'étalonnage (6, 6') respective présente un aspect différent de l'aspect du mélange de fourrage au niveau de la vitre (1).

23. Procédé selon la revendication 22, **caractérisé en ce que** la tête de capteur PIR (H) est ajustée de manière sélective dans plus d'une position d'étalonnage par rapport à une première surface d'étalonnage (6) fixe au sein du boîtier (5) et à au moins une deuxième surface d'étalonnage (6') fixe présentant des aspects différents les uns des autres et différents de l'aspect du mélange de fourrage au niveau de la vitre (1).

24. Procédé selon la revendication 22, **caractérisé en ce que,** dans la position d'étalonnage, la surface d'étalonnage (6, 6') est scannée en continu pendant environ 2 à 10 secondes, tandis que, dans la position de balayage, la vitre (1) est scannée à une cadence régulière, et **en ce qu'**une autre mesure est mise en œuvre par mesure de sécurité au moins après la détermination des valeurs de fourrage et/ou de la précision de mélange.
